# EUROPÄISCHE PATENTSCHRIFT

(11) **EP 3 995 792 B1**
(45) Veröffentlichungstag und Bekanntmachung des Hinweises auf die Patenterteilung: **20.12.2023**
(21) Anmeldenummer: 21201148.0
(22) Anmeldetag: 06.10.2021
(51) Int. Cl.: G01G 19/08, G01M 1/12

(54) **VERFAHREN ZUR LASTMESSUNG BEI EINEM TRANSPORTFAHRZEUG UND TRANSPORTFAHRZEUG**
TRANSPORT VEHICLE AND METHOD FOR DETERMINING LOAD IN A TRANSPORT VEHICLE
PROCÉDÉ DE MESURE DE CHARGE SUR UN VÉHICULE DE TRANSPORT ET VÉHICULE DE TRANSPORT

(30) Priorität: 06.11.2020 DE 102020129274
(43) Veröffentlichungstag der Anmeldung: 11.05.2022
(73) Patentinhaber: STILL GmbH, 22113 Hamburg (DE)
(72) Erfinder: TÜGEL, Caspar, 20253 Hamburg (DE); BERGMANN, Ansgar, 22941 Bargteheide (DE)
(74) Vertreter: Patentship Patentanwaltgesellschaft

(56) Entgegenhaltungen:
- EP-B1- 2 508 405

## Beschreibung

Die Erfindung betrifft ein Verfahren zur Lastmessung bei einem, insbesondere fahrerlosen, als flacher Plattformwagen ausgebildeten, Transportfahrzeug für den horizontalen Transport einer Last.

Außerdem betrifft die Erfindung ein Transportfahrzeug, insbesondere ein fahrerloses, als flacher Plattformwagen ausgebildetes, Transportfahrzeug, zur Durchführung des Verfahrens.

Die EP 2 508 405 B1 offenbart ein als Kraftfahrtzeug ausgebildetes Fahrzeug mit einer kontinuierlichen Berechnung des Schwerpunktes des Fahrzeugs.

Zur Optimierung und Automatisierung des innerbetrieblichen Transports werden zunehmend fahrerlose und somit autonome oder automatisierten Transportfahrzeuge, sogenannte AGV (automated guided vehicles), für den innerbetrieblichen Transport verwendet. Hierzu werden vermehrt verschiedene Formen kompakter und flacher selbstfahrender, als Plattformwagen ausgebildeter und elektrisch angetriebener, automatisch oder autonom navigierender Transportfahrzeuge eingesetzt, die einen Ladungsträger, beispielsweise eine Palette oder einen Rollwagen, unterfahren und leicht anheben, um diesen horizontal zu verfahren und wieder abzusetzen. Diese fahrerlosen Transportfahrzeuge steuern und navigieren sich hierbei automatisch oder autonom.

Einsatzbereiche für derartige fahrerlose Transportfahrzeuge im innerbetrieblichen Transport sind beispielsweise der Transport von Paletten oder Rollwagen vom Abstellort zu einem Kommissionierarbeitsplatz und zurück oder von einem Kommissionierarbeitsplatz an einem Produktionsarbeitsplatz.

Je nach Aufgabe, Ladungen, Ladungsträger, Umgebung gibt es unterschiedliche Anforderungen und damit unterschiedliche Typen, Größen und Ausführungen derartiger fahrerloser Transportfahrzeuge.

Derartige Transportfahrzeuge werden in der Regel für sehr unterschiedliche Lasten verwendet. Dabei ist häufig die Stabilität des Transportfahrzeugs und/oder der aufgenommenen Last kritisch, zum Beispiel gegen das Kippen zur Seite oder nach vorn.

Die Stabilität ist von mehreren Faktoren abhängig, insbesondere
1. von der Masse der Last, von der Schwerpunktlage der Last in allen drei Koordinatenrichtungen sowie von weiteren Lasteigenschaften wie Steifigkeit und Konsistenz der Last,
2. von den Eigenschaften des Transportfahrzeugs wie Radstand, Spur, zusätzlichen Stützen, Steifigkeiten, Schwingungen usw.,
3. von den Eigenschaften der Fahrbahn wie Neigungen, Unebenheiten, Steifigkeiten usw. und
4. von dem dynamischen Verhalten des Transportfahrzeugs wie Fahrgeschwindigkeit, Beschleunigung, Verzögerung und Querbeschleunigung (Kurvengeschwindigkeit und -Radius).

Sind die Bedingungen nach den Faktoren 1 bis 3 gegeben, muss das dynamische Verhalten des Transportfahrzeugs entsprechend eingestellt werden, damit das Transportfahrzeug stabil fährt. Sind alle Bedingungen, insbesondere die Faktoren 1 und 3, möglichst genau bekannt, kann das dynamische Verhalten des Transportfahrzeugs so eingestellt werden, dass sich eine optimale Umschlagsleistung des Transportfahrzeugs mit der erforderlichen Sicherheit verbinden lässt. Sind die Bedingungen nicht bekannt, muss das dynamische Verhalten des Transportfahrzeugs aus Sicherheitsgründen auf den ungünstigsten zu erwartenden Fall eingestellt werden, womit die Umschlagsleistung des Transportfahrzeugs deutlich reduziert wird. Zusätzlich gibt es trotzdem Restrisiken, weil durch Fehler auch eine noch ungünstigere Last als die erwartete ungünstigste Last möglich ist.

Der vorliegenden Erfindung liegt die Aufgabe zugrunde, ein Verfahren der eingangs genannten Art sowie ein Transportfahrzeug zur Durchführung des Verfahrens zur Verfügung zu stellen, die eine möglichst genaue Erfassung der konkreten Eigenschaften der Last, insbesondere von Masse und Schwerpunktlage der Last, ermöglichen.

Diese Aufgabe wird verfahrensseitig erfindungsgemäß dadurch gelöst, dass das Transportfahrzeug ein Fahrwerk zum Fahren auf einer Fahrbahnebene und eine Lastaufnahmeplattform zur Aufnahme der, insbesondere auf einem Ladungsträger angeordneten, Last aufweist, wobei das Fahrwerk in vertikaler Richtung unterhalb der Lastaufnahmeplattform angeordnet ist, und wobei sich die Lastaufnahmeplattform über drei Verbindungsstellen am Fahrwerk abstützt, wobei mittels Sensoren an den Verbindungsstellen Kraftmessungen durchgeführt werden, wobei zumindest die Kräfte senkrecht zur Fahrbahnebene (in z-Richtung) an allen drei Verbindungsstellen gemessen werden und die Kräfte längs zur Fahrtrichtung (in x-Richtung) während einer Beschleunigung des Transportfahrzeugs in Fahrtrichtung ermittelt werden und daraus in einer elektronischen Datenverarbeitungseinrichtung Masse und Schwerpunktlage der auf der Lastaufnahmeplattform aufgenommenen Last berechnet werden.

Der Grundgedanke der Erfindung besteht dabei in der Ermittlung der aufgenommenen Last und deren Schwerpunktlage, um die Lastaufnahme zu optimieren und auf Zulässigkeit zu überprüfen, sowie um ein vom konkreten Beladungszustand abhängiges Fahr- bzw. Geschwindigkeitsprofil des Transportfahrzeugs einzustellen. Andernfalls müsste immer ein Worst-Case-Geschwindigkeitsprofil eingestellt werden, was zu einer deutlich geringeren Umschlagsleistung des Transportfahrzeugs führen würde.

Im Rahmen der vorliegenden Erfindung gilt folgende Definition des Koordinatensystems:
-x -> Fahrtrichtung vorwärts;
+y -> senkrecht zur Fahrtrichtung, von der Fahrtrichtung nach rechts;
+z -> nach oben, senkrecht zur Fahrbahnebene.

Die Verbindung von der Lastaufnahmeplattform oder von einem mit dieser Plattform verbundenen Rahmen zum Fahrwerk wird statisch bestimmt ausgeführt über die drei Verbindungsstellen. Dabei können beispielsweise zwei der Verbindungsstellen Kräfte in x- und z-Richtung übertragen, während die dritte Verbindungsstelle nur Kräfte in z-Richtung überträgt. Die y- Richtung kann durch seitliche Anlage einer der Verbindungsstellen abgedeckt werden, wobei die y-Richtung für den hier verfolgten Zweck vernachlässigt werden kann.

Vorzugsweise wird an den beiden Verbindungsstellen, die Kräfte in x- und z-Richtung übertragen, auch jeweils die Kräfte in diesen beiden Richtungen gemessen. Da jede Kraftmessstelle deutliche Kosten verursacht, können die Kräfte längs zur Fahrtrichtung (in x-Richtung) auch mittels mindestens eines Beschleunigungssensors gemessen werden. Somit kann die Kraftmessung in x-Richtung ersetzt werden durch die Verwendung eines kostengünstigen Beschleunigungssensors.

Eine weitere Ausgestaltung sieht vor, dass die Kräfte längs zur Fahrtrichtung (in x-Richtung) mittels Berechnung der Beschleunigung aus Drehzahlen eines Fahrantriebs berechnet werden. Diese Drehzahlen sind aus der Antriebsregelung ohnehin bekannt bzw. werden hierfür und auch für eine Sicherheitsüberwachung gemessen.

Nachteil dieser Art der Messung ist, dass aus verschiedenen Gründen ein deutlicher Zeitversatz zwischen diesen Beschleunigungsmessungen und den gemessenen Reaktionskräften in z-Richtung möglich ist, durch mechanische Elastizitäten, Reibungen in der Kraftübertragung usw., durch die Eigenschaften der Last sowie durch Rechenzeiten für die Signalauswertungen.

Durch Elastizitäten und andere Einflüsse sind allen Messwerten auch Schwingungen überlagert. Daher ist eine Zuordnung der Beschleunigungen in x-Richtung zu den Kraftänderungen in z-Richtung schwierig.

Wenn jedoch für die Ermittlung der Schwerpunkthöhe der Last nur eine geringe Genauigkeit gefordert wird - zum Beispiel weil nur wenige verschiedene, aber klar definierte Lasten transportiert werden, oder weil die Transporte in abgegrenzten Bereichen erfolgen und daher nicht sicherheitsrelevant sind - und durch umfangreiche Versuche ein dieser geringen Genauigkeitsanforderung genügender Zusammenhang ermittelt wird, kann auf diese Weise eine kostengünstige Lösung dargestellt werden.

Eine besonders genaue Bestimmung von Masse und Schwerpunktlage der Last wird dadurch ermöglicht, dass die Kräfte längs zur Fahrtrichtung (in x-Richtung) an mindestens zwei Verbindungsstellen direkt mittels Sensoren gemessen werden.

Außerdem kann die Bestimmung von Masse und Schwerpunktlage der Last noch dadurch weiter verbessert werden, dass die Kräfte quer zur Fahrtrichtung (in y-Richtung) an mindestens zwei Verbindungsstellen direkt mittels Sensoren gemessen werden.

Gemäß einer bevorzugten Ausgestaltung der Erfindung ist vorgesehen, dass zunächst an den drei Verbindungsstellen die Kräfte, insbesondere die Kräfte senkrecht zur Fahrbahnebene (in z-Richtung), im Stillstand des Transportfahrzeugs mit aufgenommener Last gemessen werden und damit die Masse der Last ermittelt sowie die x- und y-Koordinaten des Lastschwerpunkts bestimmt werden, anschließend das Transportfahrzeug mit der Last in x-Richtung beschleunigt wird und die Reaktionskräfte in x-Richtung auf diese Beschleunigung ermittelt werden und gleichzeitig die Kräfte in z-Richtung an den drei Verbindungsstellen gemessen werden.

Zur Messung der Kräfte an den drei Verbindungsstellen werden als Sensoren vorteilhafterweise Kraftmess-Bolzen verwendet, die die Kräfte an den Verbindungsstellen übertragen und gleichzeitig messen können. Dabei können die Kraftmess-Bolzen so ausgebildet sein, dass die Kräfte in x-Richtung und in z-Richtung mit demselben Kraftmess-Bolzen gemessen werden können. Hierzu können an dem Kraftmess-Bolzen zwei Messstellen, eine für die x-Richtung und eine für die z-Richtung, vorgesehen sein.

In diesem Fall umfasst das Vorgehen bei der Ermittlung von Masse und Schwerpunktlage der Last zweckmäßigerweise folgende Schritte:
Nach Aufnahme der Last werden zunächst an den drei Verbindungsstellen die Kräfte senkrecht zur Fahrbahnebene (in z-Richtung) im Stillstand des Transportfahrzeugs gemessen und damit die Masse der Last ermittelt sowie die x- und y- Koordinaten des Lastschwerpunktes.

Anschließend wird das Fahrzeug mit der Last gering in x-Richtung beschleunigt. Die Reaktionskräfte auf diese Beschleunigung werden von den beiden Messstellen für die x-Richtung gemessen.

Gleichzeitig oder nahezu gleichzeitig werden in allen drei Messstellen für die z-Richtung die sich aufgrund der mechanischen Gleichgewichtsbedingungen veränderten Kräfte in z-Richtung gemessen.

Da die Messstellen in x-Richtung und in z-Richtung sich jeweils an einem Kraftmess-Bolzen und mit nur minimalem räumlichen Abstand zueinander befinden, werden die Kräfte in x-Richtung und in z-Richtung quasi zeitgleich gemessen. Daher kann auch die Schwerpunkthöhe der Last direkt oder über eine experimentell ermittelte Zuordnungsfunktion aus den Messwerten errechnet werden über die mechanischen Gleichgewichtsbedingungen.

Dabei erfolgt die Beschleunigung des Transportfahrzeugs derart, dass auch bei ungünstigster anzunehmender Masse und Schwerpunktlage der Last keine Gefährdung resultiert.

Wenn die Transportfahrzeuge mit Menschen im selben Arbeitsbereich arbeiten, ist eine Anpassung des Fahrprofils des Transportfahrzeugs und somit die Erfassung der Messdaten sicherheitsrelevant. Die Sensoren, insbesondere die Kraftmess-Bolzen, sind auch mit einem dafür ausreichendem Performance Level erhältlich. Ebenso ist die Weiterverarbeitung der Messdaten entsprechend sicher möglich.

Da diese sicheren Komponenten aber deutlich teurer sind als die mit einem geringeren Performance Level, wird gemäß einer bevorzugten Weiterbildung des Erfindungsgedankens vorgeschlagen, eine ausreichende Sicherheit durch Plausibilisierung verfügbarer Daten herzustellen. Hierzu wird eine Plausibilitätsprüfung der Kraftmessungen in der Datenverarbeitungseinrichtung durchgeführt, wobei die Kraftmessungen als plausibel eingestuft werden, wenn die Änderungen der Kraftmesswerte in z-Richtung bei jeder Messung in der Summe Null ergeben.

In der Regel kann auf diese Weise eine gewisse Plausibilisierung der Messungen bei jedem Messvorgang erfolgen, da die Laständerungen in z-Richtung aufgrund der Massenträgheit in x-Richtung immer in der Summe (im Rahmen der Toleranzen und Reibungen) ungefähr 0 ergeben müssen.

Falls weitere Plausibilisierungen notwendig werden, eignet sich hierfür auch ein Abgleich mit Beschleunigungsmessungen mittels kostengünstiger BeschleunigungsSensoren. Außerdem können auch Daten eines Hubantriebes des Transportfahrzeugs, insbesondere Daten zum Motorstrom und dem Drehzahlprofil, verwendet werden.

Für die Plausibilisierung der Kräfte in x-Richtung kann ebenso ein kostengünstiger Beschleunigungssensor verwendet werden oder eine berechnete Beschleunigung aus den Drehzahlen der Antriebsräder. Diese Drehzahlen sind aus der Antriebsregelung ohnehin bekannt bzw. werden hierfür und auch für die Sicherheitsüberwachung gemessen. Die oben genannten Einschränkungen bezüglich zeitlicher Zuordnungen und Genauigkeiten sind für die reine Plausibilisierung nicht so relevant, wenn genügend Testreihen vorliegen und eine Korrelation ausreichend sicher festgestellt wird.

Vorzugsweise wird die Schwerpunktlage der Last durch Berechnung aus den Messwerten bei einer bekannten geometrischen Anordnung der Verbindungsstellen ermittelt.

In die Ermittlung der Masse und der Schwerpunktlage der Last können weiterhin die Eigenmassen der Lastaufnahmeplattform und gegebenenfalls des Tragrahmens, Reibungen und Hysteresen, Toleranzen, Zeitverhalten von Signalübertragungen, Eigenschwingverhalten etc. eingehen.

Einige dieser Werte können über Tests und/oder Reihenmessungen ermittelt werden. Falls erforderlich, werden Mittelwerte aus mehreren Messwerten gebildet und/oder größere Datenmengen entsprechend gefiltert.

Die sicher erreichbare Mindestgenauigkeit der ermittelten Masse und Schwerpunktlage der Last wird bevorzugt in der Verwendung der Daten berücksichtigt und jeweils der ungünstigste Wert angenommen.

Die Berechnung erfolgt zweckmäßigerweise durch eine entsprechende Software in einer elektronischen Datenverarbeitungseinrichtung, die üblicherweise ohnehin im Fahrzeug vorgesehen ist, beispielsweise für eine Antriebssteuerung oder für eine automatische Navigation oder für Sicherheitsfunktionen.

Die Berechnung kann auch in einem externen Rechner erfolgen, sofern die Datenübertragung ausreichend sicher und schnell erfolgt.

Die Messdaten können für verschiedene Zwecke verwendet werden:
In einer besonders bevorzugten Ausgestaltung der Erfindung ist vorgesehen, dass die berechnete Masse und Schwerpunktlage der Last in der elektronischen Datenverarbeitungseinrichtung mit vorgegebenen Lastspezifikationen des Transportfahrzeugs verglichen werden und bei Feststellung einer Abweichung, die größer ist als ein vorgegebener Grenzwert, der Transportvorgang abgebrochen wird. Es kann auch der vorherige Zustand hergestellt werden und eine entsprechende Meldung an ein übergeordnetes System erfolgen.

Eine weitere vorteilhafte Ausgestaltung sieht vor, dass die berechnete Schwerpunktlage der Last in der elektronischen Datenverarbeitungseinrichtung mit einer vorgegebenen optimalen Schwerpunktlage verglichen wird und bei Feststellung einer Abweichung, die größer ist als ein vorgegebener Grenzwert, ein Fahrmanöver eingeleitet wird, um die Schwerpunktlage durch eine geänderte Unterfahrposition des Transportfahrzeugs unter der Last zu optimieren.

Vorzugsweise werden Fahrprofil-Parameter des Transportfahrzeugs an die berechnete Masse und Schwerpunktlage der Last in der elektronischen Datenverarbeitungseinrichtung angepasst. Mit der Anpassung von Parametern des Fahrprofils an die konkret aufgenommene Beladung kann das Ziel einer optimierten, also gesteigerten Umschlagsleistung, ohne Beeinträchtigung der Sicherheit erreicht werden. Je nach Masse und Eigenschaften der Last und je nach Schwerpunktlage werden fahrdynamische Eigenschaften des Transportfahrzeugs verändert, wie zum Beispiel der minimale Bremsweg, die Stabilität, Stand- bzw. Kippsicherheit des Fahrzeugs oder der Last, mechanische Belastungen von Fahrzeugteilen und der Fahrbahn. Dementsprechend können beispielsweise die maximale Fahrgeschwindigkeit, die minimalen und maximalen Beschleunigungen und Verzögerungen sowie die maximale Kurvengeschwindigkeit im Verhältnis zum Kurvenradius an den Beladungszustand angepasst werden. Grundlage für die Zuordnung oder Berechnung der optimalen Fahrprofile sind zum Beispiel im System abgelegte Daten, die durch ausreichend ausführliche Berechnungen und Testreihen ermittelt wurden. Auch die Fahrroute kann gegebenenfalls angepasst werden, um beispielsweise größere Sicherheitsabstände zu erreichen, Fahrwege mit Einschränkungen zu vermeiden, Steigungen und/oder Gefälle und/oder Unebenheiten zu vermeiden. Der Beladungszustand kann an ein übergeordnetes System gemeldet werden, das gegebenenfalls diese Routenänderungen errechnet und auch andere Auswertungen und Maßnahmen ableitet.

Eine weitere vorteilhafte Ausgestaltung sieht vor, dass die berechnete Masse und Schwerpunktlage der Last in der elektronischen Datenverarbeitungseinrichtung und/oder einer zentralen Rechnereinheit für statistische Zwecke gespeichert werden. So können die Daten für eine erweiterte elektronische und/oder manuelle Auswertung im Bereich der Statistik und als Input für Prozesse mit künstlicher Intelligenz zur Verfügung gestellt werden. Auf diese Weise können zum Beispiel Lebensdauern der Transportfahrzeuge anhand von Bewegungs-, Last- und Dynamikdaten vorausberechnet werden, Serviceintervalle aufgrund der Analyse der Einsatzhärte optimiert werden, die Lagerwirtschaft aufgrund von Auslastungs- und Nutzungsdaten der einzelnen Transportfahrzeuge optimiert werden und die Kommissionierung und Ableitung von Best Practise Methoden bei der Warenzusammenstellung und - Verteilung auf dem Transportfahrzeug optimiert werden.

Gemäß einer besonders bevorzugten Ausführungsform der Erfindung werden die Masse und Schwerpunktlage der Last während der Fahrt kontinuierlich oder periodisch ermittelt und bei Erkennung eines Verrutschens der Last durch Veränderungen der ermittelten Werte durch die elektronische Datenverarbeitungseinrichtung eine Sicherheitsreaktion, die insbesondere einen Nothalt oder eine Verringerung der Fahrgeschwindigkeit und/oder eine Signalisierung durch Warnsignale und/oder eine Warnmeldung an ein übergeordnetes Verkehrssteuerungssystem umfasst, eingeleitet. Dabei kann die Lastüberwachung während der Fahrt durch kontinuierliche oder periodische Messungen und durch Vergleich der Messungen untereinander bzw. mit den Messungen bei Fahrtantritt erfolgen. Auf diese Weise kann ein Verrutschen der Last erfasst werden und es können Konsequenzen daraus gezogen werden, beispielsweise eine Nothalt oder eine Verringerung der Fahrgeschwindigkeit und/oder eine Signalisierung durch Warnsignale und/oder eine Warnmeldung an ein übergeordnetes Verkehrssteuerungssystem.

Eine Weiterbildung des Erfindungsgedankens sieht vor, dass die während der Fahrt erhobenen Messdaten auch zum Detektieren von besonderen Ereignissen, wie starken Stößen vom Boden oder Kollisionen, verwendet werden. Diese können zum Beispiel einen technischen Prüfauftrag auslösen oder auch ein sofortiges Stilllegen des Fahrzeugs. Auch für die Ursachenfindung und in eventuellen Streitigkeiten über Kostenübernahme, Garantie oder Kulanz können diese Daten verwendet werden. Für diese besonderen Ereignisse ist gegebenenfalls eine sofortige Auswertung und Reaktion erforderlich. Dafür kann eine mitlaufende Klassifizierung der Daten sinnvoll sein und/oder ein Triggern nach vorgegebenen Grenzwerten. Je nach technischem Stand und der installierten Infrastruktur zur Datenspeicherung, Datenverarbeitung und Datenübertragung kann diese Auswertung sinnvollerweise entweder durch einen Rechner im Fahrzeug oder in einem übergeordneten Rechner erfolgen. Ein entsprechendes Ereignis kann auch zum Beispiel das unzulässige Befahren einer Steigung sein, beispielsweise durch einen Fehler in der Fahrwegplanung.

Gemäß einer weiteren vorteilhaften Ausgestaltung der Erfindung werden die Masse und Schwerpunktlage der Last während der Fahrt kontinuierlich ermittelt und daraus in der elektronischen Datenverarbeitungseinrichtung Profil und Zustand der Fahrbahnebene erfasst. Dabei ist eine Ersterfassung des Fahrbahnprofils bzw. Fahrbahnzustandes möglich, insbesondere wenn mehrere Transportfahrzeuge durch viele Fahrten eine große Datenmenge zur Verfügung stellen. Insbesondere von Interesse können Veränderungen der Fahrbahn durch neue Schäden, Setzvorgänge etc. sein. Auch Hindernisse durch herumliegende Teile, insbesondere Kleinteile, können erfasst werden. So wird das Wartungs- und Reparaturmanagement für die Fahrbahn unterstützt. Als Sofortmaßnahme kann aber auch das Fahrprofil des Fahrzeugs lokal angepasst werden, um Schäden zu vermeiden. Über ein übergeordnetes Steuerungssystem ("Traffic manager") kann diese Maßnahme auf alle Fahrzeuge übertragen werden.

Für den Fall, dass die Daten der Last nicht ohnehin bekannt sind, können die ermittelten Daten (Masse und Lastschwerpunkt der Last) dem zur Identifikation der Last vorhandenen Datensatz hinzugefügt werden. Eine Beladung von Containern, Lastkraftwagen etc. kann so besser geplant werden und, mit entsprechenden Programmen, können die Daten zur Vermeidung von Überladungen oder ungünstigen Schwerpunktlagen beitragen.

Datensätze gleicher Lasten können verglichen und statistisch ausgewertet werden. Unerwartete Abweichungen können auf Fehler bei der Beladung der Ladungsträger hinweisen aber auch auf Beschädigungen, Diebstahl oder Manipulationen (zum Beispiel bei Schmuggel).

Die Daten können auch Geschäftspartnern und Behörden zur Verfügung gestellt werden, als kostenloser Service oder gegen Bezahlung.

Denkbar sind erweiterte Auswertungen. Zum Beispiel sind in Verbindung mit Daten wie Kurvenradien, Beschleunigungen, Schwingungen, Geschwindigkeiten, etc. weitere Analysen der Lasteigenschaften möglich.

Weiterhin denkbar ist auch eine Ergänzung der Lokalisierung und Navigation des Fahrzeugs mit Hilfe des Fahrbahnprofils oder aber auch eine Anpassung des allgemeinen Navigationsverhaltens aufgrund der Analyse des Fahrbahnprofils. So können zum Beispiel Überfahrten von aktuell gemeldeten Fahrbahnschäden durch nachfolgende Systeme vermieden werden.

Eine weitere Möglichkeit besteht in einer aktiven Ausregelung (Dämpfung) von Schwingungen während der Fahrt, zum Beispiel wegen schwappender oder schwingender Ladung.

Auch eine Verbesserung der Antriebsregelung, zum Beispiel durch Vermeidung der Mitkoppelung von Ladungsschwingungen in dem Antrieb, durch früh bzw. in Echtzeit vorliegende Daten zum dynamischen Verhalten der Last sind möglich.

Die Erfindung betrifft ferner ein Transportfahrzeug, insbesondere fahrerloses, als flacher Plattformwagen ausgebildetes, Transportfahrzeug, für den horizontalen Transport einer Last auf einer Fahrbahnebene zur Durchführung des Verfahrens.

Beim Transportfahrzeug wird die gestellte Aufgabe dadurch gelöst, dass das Transportfahrzeug ein Fahrwerk und eine Lastaufnahmeplattform zur Aufnahme der, insbesondere auf einem Ladungsträger angeordneten, Last aufweist, wobei das Fahrwerk in vertikaler Richtung unterhalb der Lastaufnahmeplattform angeordnet ist, und wobei sich die Lastaufnahmeplattform über drei Verbindungsstellen am Fahrwerk abstützt, wobei an den Verbindungsstellen Kraftmess-Sensoren angeordnet sind, die dazu ausgebildet sind, zumindest Kräfte senkrecht zur Fahrbahnebene (in z-Richtung) zu messen, und dass mindestens eine Krafterfassungs-Einrichtung vorgesehen ist, die dazu ausgebildet ist, Kräfte längs zur Fahrtrichtung (in x-Richtung) während einer Beschleunigung des Transportfahrzeugs in Fahrtrichtung zu erfassen, und dass eine elektronische Datenverarbeitungseinrichtung vorgesehen ist, die dazu eingerichtet ist, aus den gemessenen und erfassten Kräften Masse und Schwerpunktlage der auf der Lastaufnahmeplattform aufgenommenen Last zu berechnen.

In einer Variante der Erfindung mit geringem Investitionsaufwand umfasst die Krafterfassung-Einrichtung mindestens einen Beschleunigungssensor. Eine andere wirtschaftlich günstige Variante sieht vor, dass die Krafterfassung-Einrichtung mindestens einen Drehzahlsensor eines Fahrantriebs umfasst.

Für eine besonders genaue Bestimmung von Masse und Schwerpunktlage der Last wird gemäß einer besonders bevorzugten Ausgestaltung der Erfindung vorgeschlagen, dass die Krafterfassung-Einrichtung Kraftmess-Sensoren an mindestens zwei Verbindungsstellen umfasst, wobei die Kraftmess-Sensoren dazu ausgebildet sind, Kräfte längs zur Fahrtrichtung (in x-Richtung) zu messen.

Zweckmäßigerweise sind an mindestens zwei Verbindungsstellen Kraftmess-Sensoren vorgesehen, die dazu ausgebildet sind, Kräfte quer zur Fahrtrichtung (in y-Richtung) zu messen.

In einer vorteilhaften Ausgestaltung sind die Verbindungsstellen als Gelenkverbindungen ausgebildet. Vorzugsweise sind drei Gelenkverbindungen vorgesehen, über die die Verbindung von der Lastaufnahmeplattform oder von einem mit dieser Plattform verbundenen Tragrahmen zum Fahrwerk statisch bestimmt ist. Vorteilhafterweise sind zwei der Gelenkverbindungen dazu ausgebildet, Kräfte in x- und z-Richtung zu übertragen, während die dritte Gelenkverbindung dazu ausgebildet ist, nur Kräfte in z-Richtung zu übertragen. Die y- Richtung kann durch eine seitliche Anlage einer der Gelenkverbindungen abgedeckt werden.

Dabei sind die Gelenkverbindungen zweckmäßigerweise als Bolzenverbindungen und die Kraftmess-Sensoren als Kraftmess-Bolzen ausgebildet, die für die Bolzenverbindungen vorgesehen sind. Vorzugsweise sind die beiden Kraftmess-Bolzen, die Kräfte in x- und z-Richtung übertragen, so ausgebildet, dass sie auch jeweils Kräfte in diesen beiden Richtungen messen. Sind diese beiden Kraftmess-Bolzen kollinear zueinander angeordnet, können sie auch in einem durchgehenden Kraftmess-Bolzen vereinigt werden. Dieser Kraftmess-Bolzen hat dann bevorzugt je Richtung (x- und z-Richtung) jeweils zwei Messstellen.

Eine besonders vorteilhafte Ausgestaltung der Erfindung sieht vor, dass die Lastaufnahmeplattform an einem Tragrahmen angeordnet ist und das Fahrwerk eine Mittelachse mit zwei nicht gelenkten Rädern, eine Vorderachse mit mindestens einer gelenkten Radeinheit und eine Hinterachse mit mindestens einer gelenkten Radeinheit aufweist, und die Mittelachse und die Vorderachse des Fahrwerks an einem ersten Ausleger angeordnet sind, der mit dem Tragrahmen mittels einer ersten Gelenkachse, die eine in Fahrzeugquerrichtung verlaufende horizontale Schwenkachse aufweist, gelenkig verbunden ist, wobei die erste Gelenkachse zwei Gelenkverbindungen umfasst, die in Fahrzeugquerrichtung voneinander beabstandet angeordnet und jeweils als Bolzenverbindung ausgebildet sind, für die mindestens ein Kraftmess-Bolzen vorgesehen ist, der dazu ausgebildet ist, Kräfte in x-Richtung und in z-Richtung zu messen, und die Hinterachse des Fahrwerks an einem zweiten Ausleger angeordnet ist, der mit der Mittelachse oder dem ersten Ausleger mittels einer zweiten Gelenkachse, die eine in Fahrzeugquerrichtung verlaufende horizontale Schwenkachse aufweist, gelenkig verbunden ist, wobei der zweite Ausleger mittels eines Koppelelements mit dem Tragrahmen verbunden ist, das mit dem zweiten Ausleger und mit dem Tragrahmen gelenkig verbunden ist, wobei das Koppelelement mindestens einen Zug-Druckstab aufweist, der mit dem zweiten Ausleger mittels einer dritten Gelenkachse, die eine in Fahrzeugquerrichtung verlaufende horizontale Schwenkachse aufweist, und der mit dem Tragrahmen mittels einer vierten Gelenkachse, die eine in Fahrzeugquerrichtung verlaufende horizontale Schwenkachse aufweist, gelenkig verbunden ist, wobei die dritte Gelenkachse und die vierte Gelenkachse jeweils als Gelenkverbindung ausgebildet ist, die als Bolzenverbindung ausgebildet ist, für die mindestens ein Kraftmess-Bolzen vorgesehen ist, der dazu ausgebildet ist, Kräfte in z-Richtung zu messen.

Mit dieser Konstruktion wird eine Verteilung der Massenkräfte und somit eine Lastverteilung auf die drei Achsen erzielt, die in jedem Beladungszustand des Transportfahrzeugs, auf Fahrbahnen mit deutlichen Unebenheiten und beim Befahren von Rampen immer definiert ist Das mit diesem Fahrwerk versehene Transportfahrzeug kann größere Bodenunebenheiten und größere Rampenwinkel befahren und das Fahrwerk weist einen einfachen Aufbau auf.

Dabei ist der Tragrahmen mit dem Fahrwerk verbunden einerseits mit dem ersten Ausleger über die erste Gelenkachse und andererseits mit dem um die zweite Gelenkachse an der Mittelachse oder dem ersten Ausleger verschwenkbaren zweiten Ausleger über das Koppelelement, das sowohl mit dem zweiten Ausleger als auch mit dem Tragrahmen gelenkig verbunden ist. Mit dem Koppelelement können auf einfache Weise Kräfte zwischen dem Tragrahmen und dem zweiten Ausleger übertragen werden und der beim Verschwenken des zweiten Auslegers um die zweite Gelenkachse, die an der um die erste Gelenkachse verschwenkbaren Mittelachse oder an dem um die erste Gelenkachse verschwenkbaren ersten Ausleger angeordnet ist, erforderliche Längenausgleich auf einfache Weise erzielt werden.

Der Tragrahmen ist mit dem verschwenkbaren zweiten Ausleger über das Koppelelement verbunden, das mit zwei horizontalen Gelenkachsen an dem zweiten Ausleger und an dem Tragrahmen gelenkig angelenkt ist, so dass das Koppelelement von einem einfach aufgebauten Zug-Druckstab gebildet werden kann, der nur in eine Richtung, nämlich die Längsrichtung des Koppelelements, entsprechende Zug- bzw. Druckkräfte überträgt.

Die beiden Bolzenverbindungen, die die erste Gelenkachse bilden, können zwei separate Bolzen oder einen gemeinsamen Bolzen aufweisen.

Die Bolzenverbindungen zwischen dem ersten Ausleger des Fahrwerks und dem Tragrahmen sind vorzugsweise als Kraftmess-Bolzen ausgebildet.

Vorzugsweise sind auch eine oder beide Bolzenverbindungen zwischen dem Koppelelement und dem Tragrahmen als Kraftmess-Bolzen ausgebildet.

Somit wird eine genaue Messung des Beladungszustandes des Transportfahrzeugs hinsichtlich Gewichtskraft und Schwerpunktlage der aufgenommenen Last ermöglicht.

Die Erfindung bietet eine ganze Reihe von Vorteilen:
Die Erfindung ermöglicht eine Optimierung von Umschlagsleistung und Sicherheit durch optimierte Lastaufnahme, Vermeidung des Transports unzulässiger Lasten und ein an den Beladungszustand angepasstes Fahrprofil des Transportfahrzeugs.

Außerdem können Schäden vermieden werden.

Darüber hinaus kann die Datenbereitstellung einen Beitrag zur Prozessoptimierung, zur Reduzierung von Wartungs- und Reparaturkosten, zur Fahrbahnüberwachung sowie zur Kostenrechnung und Kostenzuordnung leisten.
Weitere Vorteile und Einzelheiten der Erfindung werden anhand der in den schematischen Figuren dargestellten Ausführungsbeispiele näher erläutert. Hierbei zeigen
- Figur 1: eine Seitenansicht des erfindungsgemäßen Transportfahrzeugs mit aufgenommener Last,
- Figur 2: eine perspektivische Darstellung des erfindungsgemäßen Transportfahrzeug ohne Last,
- Figur 3: das Transportfahrzeug der Figur 2 mit angehobener Lastaufnahmeplattform,
- Figur 4: das Transportfahrzeug der Figuren 2 und 3 ohne Verkleidungsbauteile,
- Figur 5: eine perspektivische Darstellung des Tragrahmens und des Fahrwerks des erfindungsgemäßen Transportfahrzeugs,
- Figur 6: eine weitere perspektivische Darstellung des Tragrahmens und des Fahrwerks des erfindungsgemäßen Transportfahrzeugs,
- Figur 7: eine Explosionsdarstellung des Tragrahmens und des Fahrwerks des erfindungsgemäßen Transportfahrzeugs,
- Figur 8: eine Darstellung des Tragrahmens und des Fahrwerks des erfindungsgemäßen Transportfahrzeugs auf einer ebenen Fahrbahn,
- Figur 9: eine Darstellung des Tragrahmens und des Fahrwerks des erfindungsgemäßen Transportfahrzeugs auf einer eine Senke aufweisenden Fahrbahn,
- Figur 10: eine Darstellung des Tragrahmens und des Fahrwerks des erfindungsgemäßen Transportfahrzeugs auf einer eine Kuppe aufweisenden Fahrbahn und
- Figur 11: eine Detaildarstellung eines Kraftmess-Bolzens.

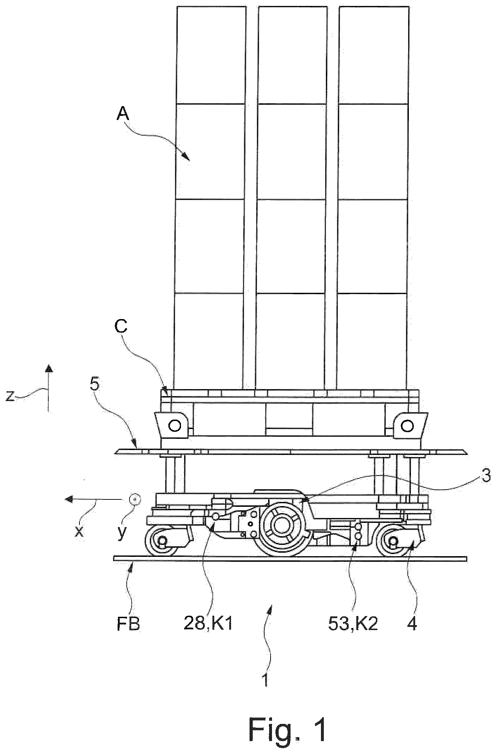

In der Figur 1 ist eine Seitenansicht des erfindungsgemäßen Transportfahrzeugs 1 mit aufgenommener Last A gezeigt. Das Transportfahrzeug 1 ist als fahrerloses, als Plattformwagen ausgebildetes, flaches Transportfahrzeug 1 ausgebildet. Es verfügt über eine Lastaufnahmeplattform 5, welche an einem Tragrahmen 3 befestigt ist. In vertikaler Richtung unterhalb der Lastaufnahmeplattform 5 und des Tragrahmens 3 ist ein Fahrwerk 4 angeordnet. Das Transportfahrzeug 1 kann sich für einen horizontalen Transport der Last A mittels des Fahrwerks 4 auf einer Fahrbahnebene FB bewegen.

Die Lastaufnahmeplattform 5 und der Tragrahmen 3 stützen sich über drei, als Gelenke ausgebildete, Verbindungsstellen, die in der Figur 1 der Übersichtlichkeit wegen nicht dargestellt sind, am Fahrwerk ab. An den drei Verbindungsstellen sind als Kraftmess-Bolzen 28, 53 ausgebildete Sensoren K1, K2 angeordnet, die die von der Lastaufnahmeplattform 5 auf das Fahrwerk 4 ausgeübten Kräfte messen.

Durch Messung der Kräfte mittels der Sensoren K1 und K2 können Masse und Schwerpunktlage der auf der Lastaufnahmeplattform 5 angeordneten Last A ermittelt werden. Die Last A ist auf einem Ladungsträger C angeordnet, der im vorliegenden Beispiel als Palette ausgebildet ist.

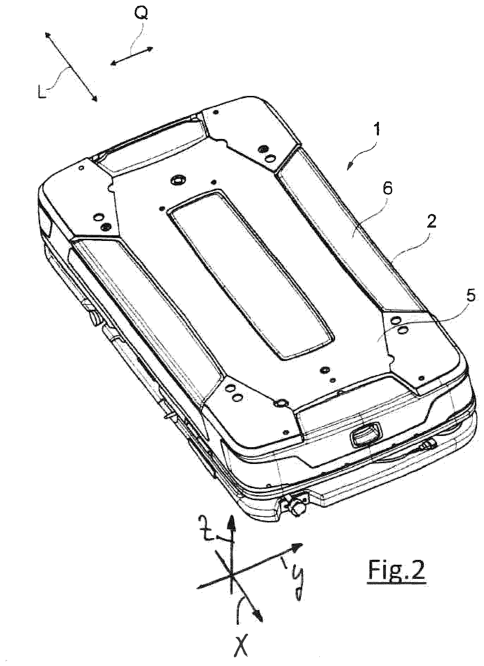

In den Figuren 2 bis 4 ist das erfindungsgemäße fahrerlose, insbesondere autonome, Transportfahrzeug 1 im Detail dargestellt. Das Transportfahrzeug 1 ist für den horizontalen Transport eines nicht näher dargestellten Ladungsträgers ausgebildet, beispielsweise einer Palette oder eines Rollwagens.

Das Transportfahrzeug 1 weist ein fahrbares Untergestell 2, das mit einem Tragrahmen 3 und einem Fahrwerk 4 versehen ist, und eine oberhalb des Untergestells 2 angeordnete anhebbare und absenkbare Lastaufnahmeplattform 5 zur Aufnahme des Ladungsträgers auf.

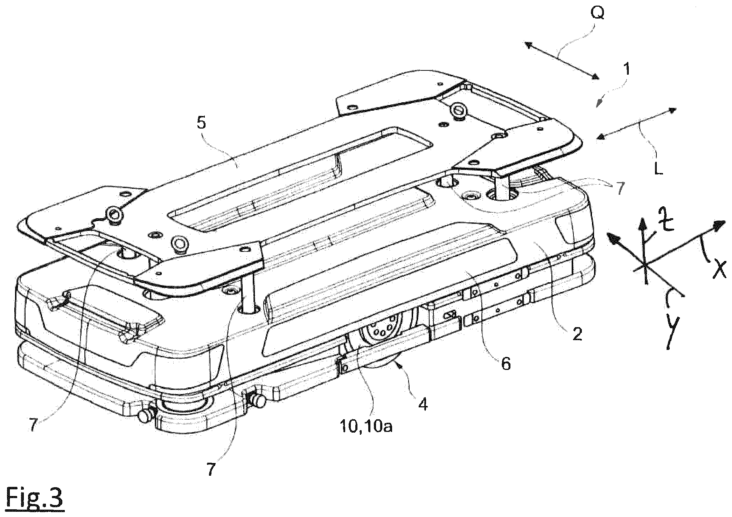

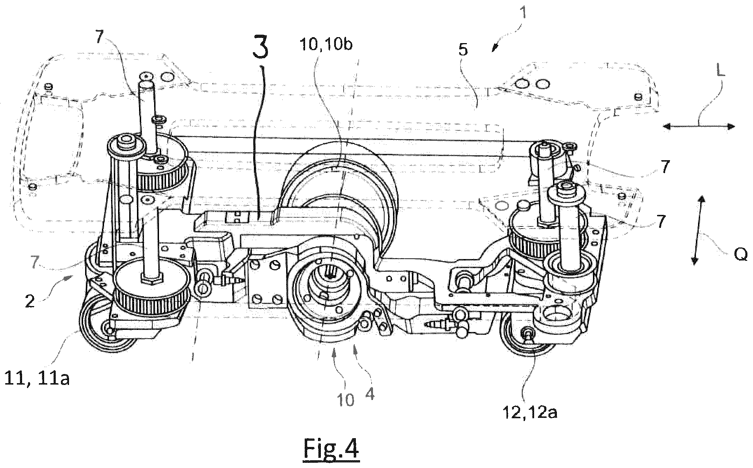

Das Untergestell 2 weist an dem Tragrahmen 3 angeordnete Verkleidungsbauteile 6 auf, unter denen der Tragrahmen 3 und das Fahrwerk 4 angeordnet sind. Die Figuren 2 und 3 zeigen das Transportfahrzeug 1 mit den Verkleidungsbauteilen 6. In der Figur 4 sind die Verkleidungsbauteile 6 nicht dargestellt.

Im dargestellten Ausführungsbeispiel ist die Lastaufnahmeplattform 5 an dem Tragrahmen 3 in vertikaler Richtung anhebbar und absenkbar angeordnet. Hierzu ist an dem Tragrahmen 3 eine in den Figuren 3 und 4 dargestellte Hubvorrichtung 7 vorgesehen, die mit der Lastaufnahmeplattform 5 in Verbindung steht.

Der Tragrahmen 3 und das Fahrwerk 4 sind in vertikaler Richtung unterhalb der Lastaufnahmeplattform 5 angeordnet. Das Transportfahrzeug 1 ist somit als flaches und kompaktes selbstfahrendes Transportfahrzeug ausgebildet, das ein Unterfahren des zu transportierenden Ladungsträgers C und ein Anheben des Ladungsträgers C mit der Lastaufnahmeplattform 5 ermöglicht, um den Ladungsträger horizontal zu transportieren und wieder abzusetzen. Die Navigation und Steuerung des Transportfahrzeugs 1 erfolgt automatisch oder autonom, alternativ ist auch ein ferngesteuerter Betrieb des Transportfahrzeugs 1 möglich.

Das Fahrwerk 4 des erfindungsgemäßen Transportfahrzeugs 1 besteht aus drei Achsen und ist von einer Mittelachse 10 mit zwei nicht gelenkten Rädern 10a, 10b, einer Vorderachse 11 mit mindestens einer gelenkten Radeinheit 11a und einer Hinterachse 12 mit mindestens einer gelenkten Radeinheit 12a gebildet.

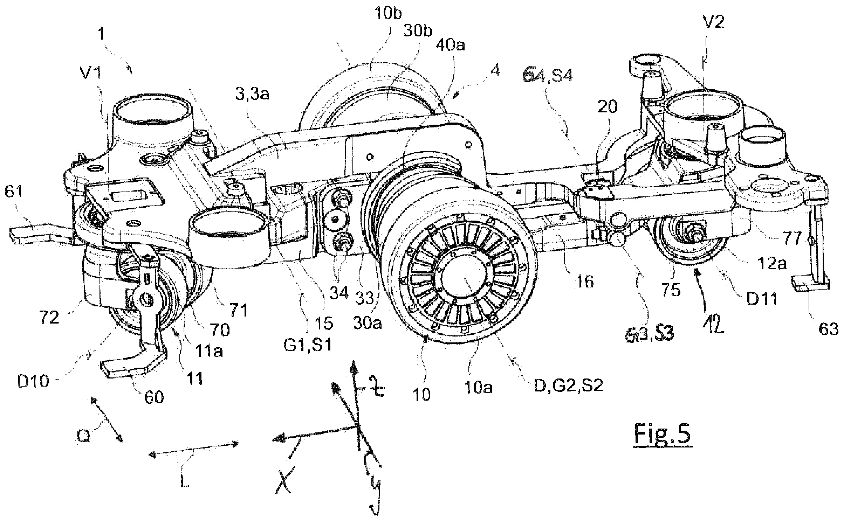

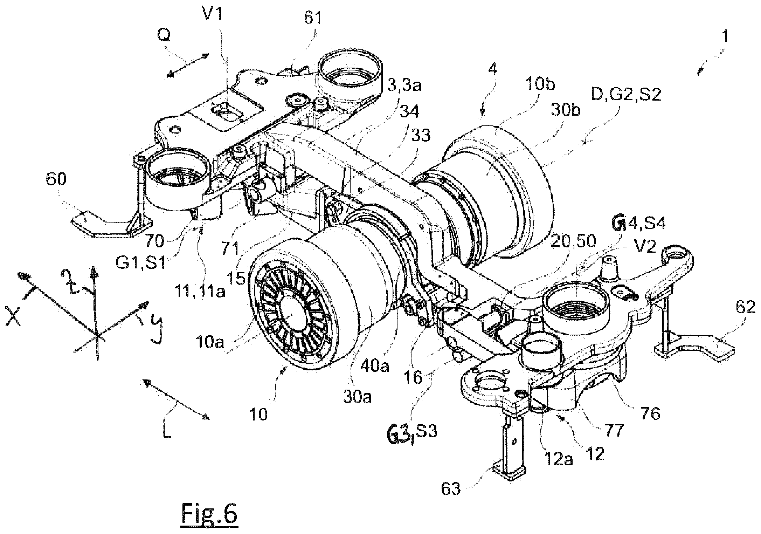

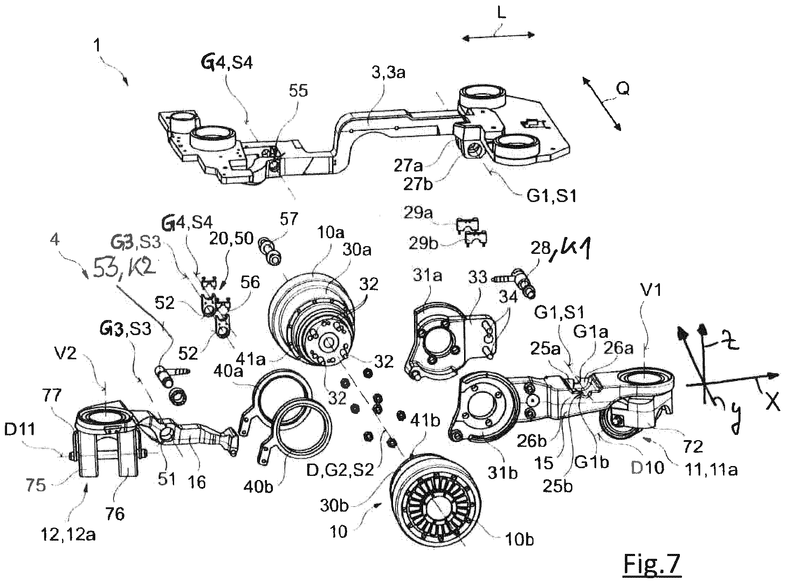

Der Aufbau des Tragrahmens 3 und des Fahrwerks 4 wird im Folgenden anhand der Figuren 5 bis 7 näher beschrieben.

Die Mittelachse 10 und die Vorderachse 11 des Fahrwerks 4 sind an einem ersten Ausleger 15 angeordnet, der mit dem Tragrahmen 3 mittels einer ersten Gelenkachse G1 gelenkig verbunden ist. Die erste Gelenkachse G1 weist eine in Fahrzeugquerrichtung Q verlaufende horizontale Schwenkachse S1 auf. Der erste Ausleger 15 ist als biege- und torsionssteifer Ausleger ausgebildet. Der erste Ausleger 15 erstreckt sich in Fahrzeuglängsrichtung L nach vorne.

Die Hinterachse 12 des Fahrwerks 4 ist an einem zweiten Ausleger 16 angeordnet. Der zweite Ausleger 16 ist mit der Mittelachse 10 oder dem ersten Ausleger 15 mittels einer zweiten Gelenkachse G2 gelenkig verbunden. Die zweite Gelenkachse G2 weist eine in Fahrzeugquerrichtung Q verlaufende horizontale Schwenkachse S2 auf. Der zweite Ausleger 16 ist mittels eines Koppelelements 20 mit dem Tragrahmen 3 verbunden. Das Koppelelement 20 ist mit dem zweiten Ausleger 16 und mit dem Tragrahmen 3 gelenkig verbunden. Der zweite Ausleger 16 ist als biege- und torsionssteifer Ausleger ausgebildet. Der zweite Ausleger 16 erstreckt sich in Fahrzeuglängsrichtung L nach hinten.

Die erste Gelenkachse G1 ist - wie in den Figuren 5 bis 7 ersichtlich ist - in Fahrzeuglängsrichtung L zwischen der Mittelachse 10 und der Vorderachse 11 angeordnet.

Im dargestellten Ausführungsbeispiel ist - wie in den Figuren 5 bis 7 ersichtlich ist - die zweite Gelenkachse G2 koaxial zu einer Drehachse D der beiden Räder 10a, 10b der Mittelachse 11 angeordnet, so dass der zweite Ausleger 6 um die Drehachse D der Mittelachse 10 verschwenkbar angeordnet ist.

Das Koppelelement 20 ist - wie in den Figuren 5 bis 7 ersichtlich ist - in Fahrzeuglängsrichtung L zwischen der Mittelachse 10 und der Hinterachse 12 angeordnet.

Der Tragrahmen 3 ist somit mit dem Fahrwerk 4 verbunden erstens mit dem ersten, festen Ausleger 15 durch die erste Gelenkverbindung G1 und zweitens mit dem zweiten, verschwenkbaren Ausleger 16 durch das Koppelelement 20.

Die beiden Räder 10a, 10b der Mittelachse 10 sind im dargestellten Ausführungsbeispiel - wie in den Figuren 5 bis 7 näher ersichtlich ist - jeweils in einem Radträger 30a, 30b um die Drehachse D drehbar gelagert. Die Radträger 30a, 30b sind an dem ersten Ausleger 15 starr und somit fest befestigt. An dem ersten Ausleger 15 ist hierzu ein erster Befestigungsflansch 31a ausgebildet, an dem der erste Radträger 30a befestigbar ist, beispielsweise mittels Befestigungsschrauben 32. An dem ersten Ausleger 15 ist hierzu weiterhin ein zweiter Befestigungsflansch 31b ausgebildet, an dem der zweite Radträger 30b befestigbar ist, beispielsweise mittels nicht näher dargestellter Befestigungsschrauben. Im dargestellten Ausführungsbeispiel ist der zweite Befestigungsflansch 31b integral an dem ersten Ausleger 15 ausgebildet. Der erste Befestigungsflansch 31a ist im dargestellten Ausführungsbeispiel an einer Flanschplatte 33 ausgebildet, die an dem Ausleger 15 befestigt ist, beispielsweise mittels Befestigungsschrauben 34.

Im dargestellten Ausführungsbeispiel ist die zweite Gelenkachse G2 von zwei an dem zweiten Ausleger 16 befestigten Lagerringen 40a, 40b gebildet. Der Lagerring 40a ist auf einer Kreisringfläche 41a des Radträgers 30a drehbar gelagert. Entsprechend ist der Lagerring 40b auf einer Kreisringfläche 41 b des Radträgers 30b drehbar gelagert. Die Kreisringflächen 41a, 41b sind konzentrisch zur Drehachse D der Räder 10a, 10b angeordnet. Der zweite Ausleger 16 ist somit um die Mittelachse 10 des Fahrwerks 4 drehbar bzw. verschwenkbar gelagert.

Zwischen der Kreisringfläche 41a, 41b des Radträgers 30a, 30b und dem entsprechenden Lagerring 40a, 40b kann ein nicht näher dargestelltes Gleitlager, beispielsweise ein Kunststoffgleitlager, angeordnet sein.

Die erste Gelenkachse G1 umfasst im dargestellten Ausführungsbeispiel zwei Gelenkverbindungen G1a, G1b, die in Fahrzeugquerrichtung Q voneinander beabstandet angeordnet sind. Die beiden Gelenkverbindungen G1a, G1b sind jeweils als Bolzenverbindung ausgebildet. Die Gelenkverbindung G1a ist von einer Aufnahmebohrung 25a in einer Seitenplatte 26a des ersten Auslegers 15 und einer Aufnahmebohrung in einer Flanschplatte 27a des Tragahmens 3 gebildet, in denen ein Bolzen 28 der Bolzenverbindung angeordnet ist. Die in der Seitenplatte 26a des Auslegers 15 ausgebildete Aufnahmebohrung 25a des Bolzens 28 ist im dargestellten Ausführungsbeispiel von einer halbkreisförmigen Ausnehmung in der Seitenplatte 26a und einer an der Seitenplatte 26a befestigten Halbschale 29a gebildet, die mit einer zweiten halbkreisförmigen Ausnehmung versehen ist. Die Gelenkverbindung G1b ist von einer Aufnahmebohrung 25b in einer Seitenplatte 26b des ersten Auslegers 15 und einer Aufnahmebohrung in einer Flanschplatte 27b des Tragahmens 3 gebildet, in denen der Bolzen 28 der Bolzenverbindung angeordnet ist. Die in der Seitenplatte 26b des Auslegers 15 ausgebildete Aufnahmebohrung 25b des Bolzens 28 ist im dargestellten Ausführungsbeispiel von einer halbkreisförmigen Ausnehmung in der Seitenplatte 26b und einer an der Seitenplatte 26b befestigten Halbschale 29b gebildet, die mit einer zweiten halbkreisförmigen Ausnehmung versehen ist. Im dargestellten ist für beide Gelenkverbindungen G1a, G1b ein gemeinsamer Bolzen 28 vorgesehen. Die beiden Gelenkverbindungen G1a, G1b übertragen jeweils Kräfte in x-Richtung und in z-Richtung, wobei die x-Richtung in Fahrtrichtung und die z-Richtung die senkrecht zur Fahrbahnebene FB nach oben gerichtete Richtung ist.

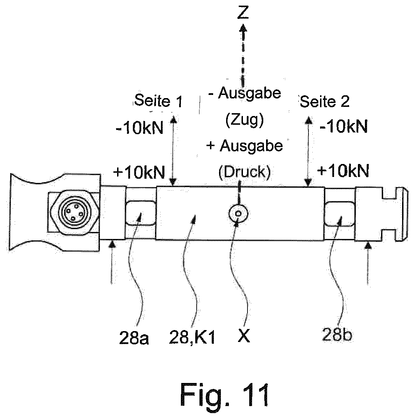

Der Bolzen 28 ist erfindungsgemäß als Kraftmessbolzen 28 ausgebildet, der den Sensor K1 darstellt. Der Kraftmessbolzen 28 verfügt, wie in Figur 11 näher dargestellt ist, über zwei Messstellen 28a, 28b, so dass die Kräfte in x- und z-Richtung an den beiden Gelenkverbindungen G1a und G1b, die eine erste und eine zweite Verbindungsstelle darstellen, mit denen die Lastaufnahmeplattform 5 über den Tragrahmen 3 an dem Fahrwerk 4 abgestützt ist, gleichzeitig gemessen werden können.

Die beiden Gelenkverbindungen G1a, G1b, die die erste Gelenkachse G1 bilden und in Fahrzeugquerrichtung Q voneinander beabstandet angeordnet sind, ermöglichen es, zwischen dem Tragrahmen 3 und dem ersten Ausleger 15 Kräfte zu übertragen sowie Drehmomente um die Fahrzeuglängsachse L zu übertragen.

Das Koppelelement 20 weist mindestens einen Zug-Druckstab 50 auf und ist mit zwei Gelenken versehen. Das Koppelelement 20 ist hierzu mit dem zweiten Ausleger 16 mittels einer dritten Gelenkachse G3, die eine in Fahrzeugquerrichtung Q verlaufende horizontale Schwenkachse S3 aufweist, und mit dem Tragrahmen 3 mittels einer vierten Gelenkachse G4, die eine in Fahrzeugquerrichtung Q verlaufende horizontale Schwenkachse S4 aufweist, gelenkig verbunden.

Die dritte Gelenkachse G3 und die vierte Gelenkachse G4 ist jeweils als Gelenkverbindung ausgebildet, die als Bolzenverbindung ausgebildet ist. Die die dritte Gelenkachse G3 bildende Gelenkverbindung ist von einer Aufnahmebohrung 51 des zweiten Auslegers 16 und einer Aufnahmebohrung 52 des Zug-Druck-Stabes 50 gebildet, in denen ein Bolzen 53 der Bolzenverbindung angeordnet ist. Die die vierte Gelenkachse G4 bildende Gelenkverbindung ist von einer Aufnahmebohrung 55 des Tragrahmens 3 und einer Aufnahmebohrung 56 des Zug-Druck-Stabes 50 gebildet, in denen ein Bolzen 57 der Bolzenverbindung angeordnet ist.

Das als Zug-Druck-Stab 50 ausgebildete und mit den beiden Gelenkachsen G3, G4 an den zweiten Ausleger 16 und an den Tragrahmen 3 angekoppelte Koppelelement 20 überträgt somit nur Kräfte in einer Richtung zwischen dem Tragrahmen 3 und dem zweiten Ausleger 16, nämlich in Längsrichtung des Koppelelements 20 und somit in z-Richtung.

Der Bolzen 53 der Gelenkverbindung G3 ist erfindungsgemäß als Kraftmessbolzen 53 ausgebildet, der den Sensor K2 bildet, welcher nur Kräfte in z-Richtung messen kann. Der Bolzen 53 misst somit an der Gelenkverbindung G3, die eine dritte Verbindungsstelle darstellt, mit der die Lastaufnahmeplattform 5 über den Tragrahmen 3 an dem Fahrwerk 4 abgestützt ist, die Kräfte in z-Richtung.

Der Tragrahmen 3 weist im dargestellten Ausführungsbeispiel einen in Fahrzeuglängsrichtung L verlaufenden Längsträger 3a auf, an dem die erste Gelenkachse G1 angeordnet ist und mit dem das Koppelelement 20 an der vierten Gelenkachse G4 gelenkig verbunden ist. Der Längsträger 3a ist als biege- und 5 torsionssteifer Längsträger ausgebildet.

Der Längsträger 3a des Tragrahmens 3 ist in Fahrzeugquerrichtung Q mittig angeordnet. Zwischen den beiden Befestigungsflanschen 31a, 31b, die an dem ersten Ausleger 15 angeordnet sind und an denen die Radträger 30a, 30b befestigt sind, ist ein Zwischenraum ausgebildet, in dem der Längsträger 3 angeordnet ist bzw. eintauchen kann. Der Längsträger 3a nutzt somit den Raum zwischen den beiden Radträgern 30a, 30b. Dies ermöglicht eine flache Bauweise des Transportfahrzeuges.

Der Längsträger 3a und somit der Tragrahmen 3 ist im Bereich der Vorderachse 11 und im Bereich der Hinterachse 12 jeweils verbreitert und in den verbreiterten Endbereichen mit der Hubeinrichtung 7 versehen, so dass die mit der Lastaufnahmeplattform 5 aufgenommene Last von den verbreiterten Endbereichen des Tragrahmens 3 aufgenommen wird.

Im dargestellten Ausführungsbeispiel ist der Tragrahmen 3 im Bereich der vier Außenecken des Transportfahrzeugs 1 jeweils mit einem stützenartigen Abstützelement 60, 61, 62, 63 versehen, die im normalen Fahrbetrieb einen kleinen Abstand zur Fahrbahn haben und beim Kippen des Transportfahrzeugs 1 mit der Fahrbahn in Kontakt gelangen.

Im dargestellten Ausführungsbeispiel sind die beiden Räder 10a, 10b der Mittelachse 10 jeweils als Antriebsrad ausgebildet, das jeweils von einer Antriebseinheit, beispielsweise einer elektrischen Antriebseinheit, angetrieben ist. Die Mittelachse 10 ist somit als Antriebsachse mit zwei Antriebseinheiten ausgebildet, die mit dem ersten Ausleger 15 fest verbunden sind. Die Antriebseinheit kann hierbei jeweils von einem elektrischen Fahrmotor gebildet sein, der direkt oder unter Zwischenschaltung eines Getriebes das entsprechende Rad 10a, 10b antreibt. Die beiden Antriebseinheiten sind unabhängig voneinander in der Drehzahl und Drehrichtung steuerbar bzw. regelbar, so dass durch unterschiedliche Drehzahlen an den beiden Rädern 10a, 10b und unterschiedlichen Drehrichtungen der Räder 10a, 10b das Transportfahrzeug 1 gelenkt werden kann und auf der Stelle drehen kann. Die Radträger 30a, 30b sind hierbei als Gehäuse der Antriebseinheiten ausgebildet.

Im dargestellten Ausführungsbeispiel ist die Radeinheit 11a der Vorderachse 11 als eine nicht-angetriebene und passiv gelenkte Radeinheit 11a ausgebildet. Die Radeinheit 11a ist an dem vorderen Ende des ersten Auslegers 15 um eine vertikale Achse V1 mittels eines entsprechenden Lagers drehbar gelagert. Die Radeinheit 11a ist mit einem Nachlauf versehen und durch den Nachlauf passiv gelenkt.

Die Radeinheit 11a der Vorderachse 11 ist in Fahrzeugquerrichtung Q mittig angeordnet.

Die Radeinheit 11a der Vorderachse 11 ist als Doppelrad mit zwei seitlich voneinander beabstandet angeordneten Rädern 70, 71 ausgebildet.

Die beiden Räder 70, 71 sind hierzu um eine gemeinsame horizontale Drehachse D10 in einem Drehschemel 72 drehbar gelagert, der um die vertikale Achse V1 im ersten Ausleger 15 drehbar gelagert ist. Die horizontale Drehachse D10 ist hierbei von der vertikalen Achse V1 in horizontaler Richtung beabstandet, wobei dieser Abstand den Nachlauf zum passiven Lenken der Radeinheit 11a bildet.

Im dargestellten Ausführungsbeispiel ist die Radeinheit 12a der Hinterachse 12 als eine nicht-angetriebene und passiv gelenkte Radeinheit 12a ausgebildet. Die Radeinheit 12a ist an dem hinteren Ende des zweiten Auslegers 16 um eine vertikale Achse V2 mittels eines entsprechenden Lagers drehbar gelagert. Die Radeinheit 12a ist mit einem Nachlauf versehen und durch den Nachlauf passiv gelenkt.

Die Radeinheit 12a der Hinterachse 12 ist in Fahrzeugquerrichtung Q mittig angeordnet.

Die Radeinheit 12a der Hinterachse 12 ist als Doppelrad mit zwei seitlich voneinander beabstandet angeordneten Rädern 75, 76 ausgebildet.

Die beiden Räder 75, 76 sind hierzu um eine gemeinsame horizontale Drehachse D11 in einem Drehschemel 77 drehbar gelagert, der um die vertikale Achse V2 im zweiten Ausleger 16 drehbar gelagert ist. Die horizontale Drehachse D11 ist hierbei von der vertikalen Achse V2 in horizontaler Richtung beabstandet, wobei dieser Abstand den Nachlauf zum passiven Lenken der Radeinheit 12a bildet.

In dem dargestellten Ausführungsbeispiel ist somit die Mittelachse 10 des Fahrwerks 4 als angetriebene Antriebsachse ausgebildet, die aus zwei Antriebseinheiten besteht, die mit dem biege- und torsionssteifen ersten Ausleger 15 fest verbunden sind. Der erste Ausleger 15 trägt die nicht angetriebene Vorderachse 11 des Fahrwerks 4, die die passiv gelenkte Radeinheit 11a umfasst. Der biege- und torsionssteife zweite Ausleger 16 trägt die nicht angetriebene Hinterachse 12 des Fahrwerks 4, die die passiv gelenkte Radeinheit 12a umfasst. Der zweite Ausleger 16 ist um die Drehachse D der Räder 10a, 10b der Mittelachse 10 drehbar bzw. verschwenkbar (Gelenkachse G2). Diese Gelenkachse G2 ist einfach und kostengünstig herzustellen durch die an dem zweiten Ausleger 16 angeordneten Lagerringe 40a, 40b, die auf den an den Gehäusen der Antriebseinheiten 30a, 30b hergestellten Kreisringflächen 41 a, 41b laufen. Der Tragrahmen 3 ist verbunden mit dem Fahrwerk 4 erstens mit dem ersten, festen Ausleger 15 durch die erste Gelenkverbindung G1, die von den zwei in Fahrzeugquerrichtung Q voneinander beabstandet angeordneten Gelenkverbindungen G1a, G1b gebildet ist, und zweitens mit dem zweiten, um die Mittelachse 10 verschwenkbaren Ausleger 16 durch das die zwei Gelenke (Gelenkachsen G3, G4) aufweisende Koppelelement 20.

An dem Tragrahmen 3 sind die Verkleidungsbauteile 6 befestigt. Weiterhin sind an dem Tragrahmen 3 weitere nicht näher dargestellte Komponenten des fahrerlosen Transportfahrzeuges 1 befestigt, beispielsweise eine Batterie, ein elektrischer Hubmotor der Hubvorrichtung 7, elektronische Steuerungen zur Ansteuerung der elektrischen Antriebseinheiten der beiden Räder 10a, 10b und zur Ansteuerung des 30 Hubmotors, sowie Sensoren, beispielsweise Sensoren zur Umfeldüberwachung und/oder zur Navigation des fahrerlosen Transportfahrzeugs.

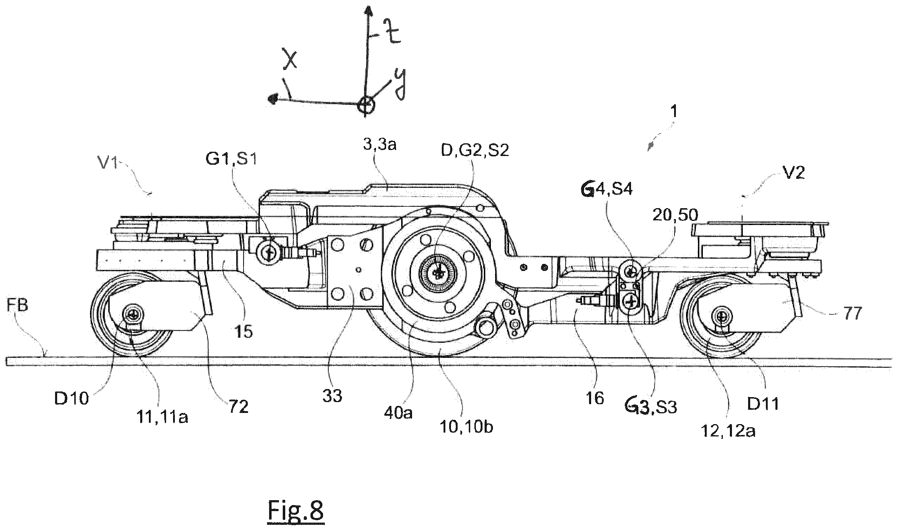

In der Figur 8 ist der Tragrahmen 3 und das Fahrwerk 4 des erfindungsgemäßen Transportfahrzeugs 1 auf einer ebenen Fahrbahn FB dargestellt. Die Räder 10a, 10b der Mittelachse 10, die Radeinheit 11a der Vorderachse 11 und die Radeinheit 12a der Hinterachse 12 haben Bodenkontakt.

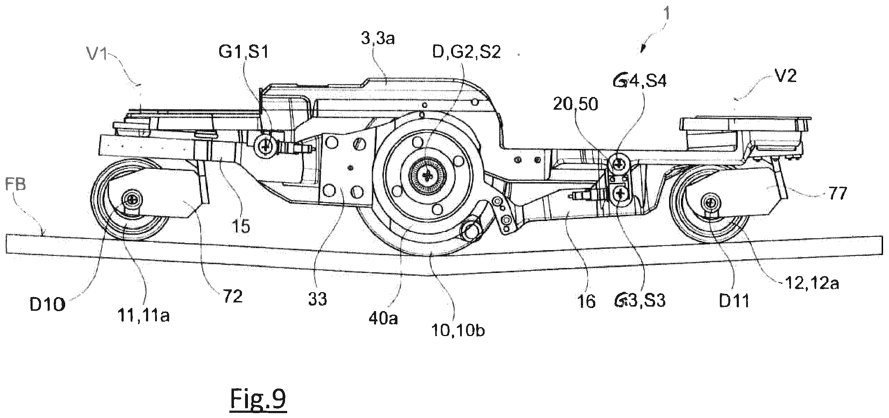

Die Figur 9 zeigt den Tragrahmen 3 und das Fahrwerk 4 des erfindungsgemäßen Transportfahrzeugs 1 beim Durchfahren einer Senke in der Fahrbahn FB, wobei sich die Mittelachse 10 in der Senke der Fahrbahn FB befindet. Die Räder 10a, 10b der Mittelachse 10, die Radeinheit 11a der Vorderachse 11 und die Radeinheit 12a der Hinterachse 12 haben Bodenkontakt. Gegenüber der Figur 8 ist der erste Ausleger 15 um die erste Gelenkachse G1 im Uhrzeigersinn verschwenkt, so dass die Mittelachse 10 nach unten verschwenkt ist und die Vorderachse 11 nach oben verschwenkt ist. Durch die Schwenkbewegung der Mittelachse 10 nach unten wird der an der Mittelachse 10 um die zweite Gelenkachse G2 angekoppelte zweite Ausleger 16, der mit dem zwei Gelenke (Gelenkachsen G3, G4) aufweisenden Koppelelement 20 am Tragrahmen 3 gelenkig angekoppelt ist, im Gegenuhrzeigersinn verschwenkt, so dass die Hinterachse 12 nach oben verschwenkt wird. Das Koppelelement 20 ermöglicht hierbei den notwendigen Längenausgleich beim Verschwenken des zweiten Auslegers 16.

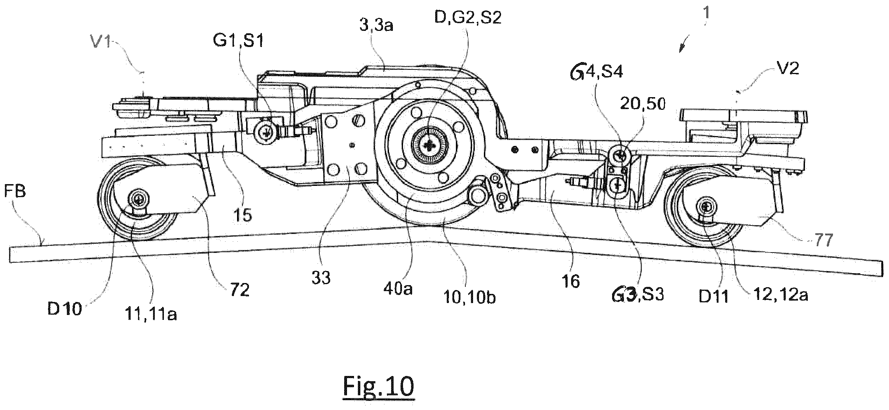

Die Figur 10 zeigt den Tragrahmen 3 und das Fahrwerk 4 des erfindungsgemäßen Transportfahrzeugs 1 beim Durchfahren einer Kuppe auf der Fahrbahn FB, wobei sich die Mittelachse 10 auf der Kuppe der Fahrbahn FB befindet. Die Räder 10a, 10b der Mittelachse 10, die Radeinheit 11a der Vorderachse 11 und die Radeinheit 12a der Hinterachse 12 haben Bodenkontakt. Gegenüber der Figur 8 ist der erste Ausleger 15 um die erste Gelenkachse G1 im Gegenuhrzeigersinn verschwenkt, so dass die Mittelachse 10 nach oben verschwenkt ist und die Vorderachse 1 1 nach unten verschwenkt ist. Durch die Schwenkbewegung der Mittelachse 10 nach oben wird der an der Mittelachse 10 um die zweite Gelenkachse G2 angekoppelte zweite Ausleger 16, der mit dem zwei Gelenke (Gelenkachsen G3, G4) aufweisenden Koppelelement 20 am Tragrahmen 3 gelenkig angekoppelt ist, im Uhrzeigersinn verschwenkt, so dass die Hinterachse 12 nach unten verschwenkt wird. Das Koppelelement 20 ermöglicht hierbei den notwendigen Längenausgleich beim Verschwenken des zweiten Auslegers 16.

Die Figur 11 zeigt den Kraftmess-Bolzen 28 der beiden Gelenkverbindungen G1a, G1b im Detail. Der Kraftmess-Bolzen 28 weist zwei Messstellen 28a und 28b auf, mit denen gleichzeitig die Kräfte in x-Richtung und z-Richtung an beiden Gelenkverbindungen G1a, G1b gemessen werden können.

Bei dem Transportfahrtzeug 1 ist somit die Verbindung von der Lastaufnahmeplattform 5 bzw. von dem mit der Lastaufnahmeplattform 5 verbundenen Tragrahmen 3 zum Fahrwerk 4 statisch bestimmt ausgeführt über die drei von den Gelenkverbindungen G1a, G1b und G3 gebildeten Verbindungsstellen. Dabei übertragen die beiden Gelenkverbindungen G1a, G1b jeweils Kräfte in x- und z-Richtung, während die dritte Gelenkverbindung G3 nur Kräfte in z-Richtung überträgt. Der gemeinsame Kraftmessbolzen 28 der beiden Gelenkverbindungen G1a, G1b misst hierbei an beiden Gelenkverbindungen G1a, G1b jeweils die Kräfte in x- und z-Richtung. Der Kraftmessbolzen 53 an der Gelenkverbindung G3 misst nur die Kräfte in z-Richtung.

Gemäß der Erfindung ist vorgesehen, dass zunächst an den drei Gelenkverbindungen G1a, G1b und G3 von den Kraftmessbolzen 28, 53 die die Kräfte senkrecht zur Fahrbahnebene (in z-Richtung) und in Fahrtrichtung (x-Richtung) im Stillstand des Transportfahrzeugs 1 mit aufgenommener Last A gemessen werden. In einer nicht näher dargestellten elektronischen Datenverarbeitungseinrichtung des Transportfahrzeugs 1 können aus diesen Messwerten der Kraftmessbolzen 28, 53 die Masse der Last A ermittelt sowie bei in der Datenverarbeitungseinrichtung bekannter geometrischer Anordnung der drei Gelenkverbindungen G1a, G1 b und G3 die x- und y-Koordinaten des Lastschwerpunkts der Last A bestimmt werden.

Anschließend wird das Transportfahrzeug 1 mit der Last in x-Richtung beschleunigt, wobei mit dem die Kräfte in x-Richtung in den beiden Gelenkverbindungen G1a, G1b messenden Kraftmessbolzen 28 die Reaktionskräfte in x-Richtung auf diese Beschleunigung ermittelt werden und gleichzeitig die sich aufgrund der mechanischen Gleichgewichtsbedingungen verändernden Kräfte in z-Richtung an den drei Gelenkverbindungen G1a, G1b und G3 mittels der Kraftmessbolzen 28, 53 gemessen werden.

Da sich die Messstellen in x-Richtung und in z-Richtung sich jeweils an dem Kraftmessbolzen 28 und mit nur minimalem räumlichen Abstand zueinander befinden, werden die Kräfte in x-Richtung und in z-Richtung quasi zeitgleich gemessen. Daher kann in der Datenverarbeitungseinrichtung auch die Schwerpunkthöhe und somit die z-Koordinate der Last A direkt oder über eine experimentell ermittelte Zuordnungsfunktion aus den Messwerten errechnet werden über die mechanischen Gleichgewichtsbedingungen.

## Patentansprüche

1. Verfahren zur Lastmessung bei einem, insbesondere fahrerlosen, als flacher Plattformwagen ausgebildeten, Transportfahrzeug (1) für den horizontalen Transport einer Last (A), wobei das Transportfahrzeug (1) ein Fahrwerk (4) zum Fahren auf einer Fahrbahnebene (FB) und eine Lastaufnahmeplattform (5) zur Aufnahme der, insbesondere auf einem Ladungsträger (C) angeordneten, Last (A) aufweist, wobei das Fahrwerk (4) in vertikaler Richtung unterhalb der Lastaufnahmeplattform (5) angeordnet ist, und wobei sich die Lastaufnahmeplattform (5) über drei Verbindungsstellen am Fahrwerk (4) abstützt, wobei mittels Sensoren (K1, K2) an den Verbindungsstellen Kraftmessungen durchgeführt werden, wobei zumindest die Kräfte senkrecht zur Fahrbahnebene (FB) (in z-Richtung) an allen drei Verbindungsstellen gemessen werden und die Kräfte längs zur Fahrtrichtung (in x-Richtung) während einer Beschleunigung des Transportfahrzeugs (1) in Fahrtrichtung ermittelt werden, **dadurch gekennzeichnet, dass** daraus in einer elektronischen Datenverarbeitungseinrichtung Masse und Schwerpunktlage der auf der Lastaufnahmeplattform (5) aufgenommenen Last (A) berechnet werden.

2. Verfahren nach Anspruch 1, **dadurch gekennzeichnet, dass** die Kräfte längs zur Fahrtrichtung (in x-Richtung) mittels mindestens eines Beschleunigungssensors gemessen werden.

3. Verfahren nach Anspruch 1 oder 2, **dadurch gekennzeichnet, dass** die Kräfte längs zur Fahrtrichtung (in x-Richtung) mittels Berechnung der Beschleunigung aus Drehzahlen eines Fahrantriebs berechnet werden.

4. Verfahren nach einem der Ansprüche 1 bis 3, **dadurch gekennzeichnet, dass** die Kräfte längs zur Fahrtrichtung (in x-Richtung) an mindestens zwei Verbindungsstellen gemessen werden.

5. Verfahren nach einem der Ansprüche 1 bis 4, **dadurch gekennzeichnet, dass** die Kräfte quer zur Fahrtrichtung (in y-Richtung) an mindestens zwei Verbindungsstellen gemessen werden.

6. Verfahren nach einem der Ansprüche 1 bis 5, **dadurch gekennzeichnet, dass** zunächst die Kräfte im Stillstand des Transportfahrzeugs (1) mit aufgenommener Last (A) gemessen werden und damit die Masse der Last (A) ermittelt sowie die x- und y-Koordinaten des Lastschwerpunkts bestimmt werden, anschließend das Transportfahrzeug (1) mit der Last in x-Richtung beschleunigt wird und die Reaktionskräfte in x-Richtung auf diese Beschleunigung ermittelt werden und gleichzeitig die Kräfte in z-Richtung an den drei Verbindungsstellen gemessen werden.

7. Verfahren nach einem der Ansprüche 1 bis 6, **dadurch gekennzeichnet, dass** eine Plausibilitätsprüfung der Kraftmessungen in der Datenverarbeitungseinrichtung durchgeführt wird, wobei die Kraftmessungen als plausibel eingestuft werden, wenn die Änderungen der Kraftmesswerte in z-Richtung bei jeder Messung in der Summe Null ergeben.

8. Verfahren nach einem der Ansprüche 1 bis 7, **dadurch gekennzeichnet, dass** die Schwerpunktlage der Last (A) durch Berechnung aus den Messwerten bei einer bekannten geometrischen Anordnung der Verbindungsstellen ermittelt wird.

9. Verfahren nach einem der Ansprüche 1 bis 8, **dadurch gekennzeichnet, dass** die berechnete Masse und Schwerpunktlage der Last (A) in der elektronischen Datenverarbeitungseinrichtung mit vorgegebenen Lastspezifikationen des Transportfahrzeugs verglichen werden und bei Feststellung einer Abweichung, die größer ist als ein vorgegebener Grenzwert, der Transportvorgang abgebrochen wird.

10. Verfahren nach einem der Ansprüche 1 bis 9, **dadurch gekennzeichnet, dass** die berechnete Schwerpunktlage der Last (A) in der elektronischen Datenverarbeitungseinrichtung mit einer vorgegebenen optimalen Schwerpunktlage verglichen wird und bei Feststellung einer Abweichung, die größer ist als ein vorgegebener Grenzwert, ein Fahrmanöver eingeleitet wird, um die Schwerpunktlage durch eine geänderte Unterfahrposition unter der Last zu optimieren.

11. Verfahren nach einem der Ansprüche 1 bis 10, **dadurch gekennzeichnet, dass** Fahrprofil-Parameter des Transportfahrzeugs (1) an die berechnete Masse und Schwerpunktlage der Last (A) in der elektronischen Datenverarbeitungseinrichtung angepasst werden.

12. Verfahren nach einem der Ansprüche 1 bis 11, **dadurch gekennzeichnet, dass** die berechnete Masse und Schwerpunktlage der Last (A) in der elektronischen Datenverarbeitungseinrichtung und/oder einer zentralen Rechnereinheit für statistische Zwecke gespeichert werden.

13. Verfahren nach einem der Ansprüche 1 bis 12, **dadurch gekennzeichnet, dass** die Masse und Schwerpunktlage der Last (A) während der Fahrt kontinuierlich oder periodisch ermittelt werden und bei Erkennung eines Verrutschens der Last (A) durch Veränderungen der ermittelten Werte durch die elektronische Datenverarbeitungseinrichtung eine Sicherheitsreaktion, die insbesondere einen Nothalt oder eine Verringerung der Fahrgeschwindigkeit und/oder eine Signalisierung durch Warnsignale und/oder eine Warnmeldung an ein übergeordnetes Verkehrssteuerungssystem umfasst, eingeleitet wird.

14. Verfahren nach einem der Ansprüche 1 bis 13, **dadurch gekennzeichnet, dass** die Masse und Schwerpunktlage der Last (A) während der Fahrt kontinuierlich ermittelt werden und daraus in der elektronischen Datenverarbeitungseinrichtung Profil und Zustand der Fahrbahnebene (FB) erfasst werden.

15. Transportfahrzeug (1), insbesondere fahrerloses, als flacher Plattformwagen ausgebildetes, Transportfahrzeug (1), für den horizontalen Transport einer Last (A) auf einer Fahrbahnebene (FB) zur Durchführung des Verfahrens nach einem der Ansprüche 1 bis 14, wobei das Transportfahrzeug (1) ein Fahrwerk (4) und eine Lastaufnahmeplattform (5) zur Aufnahme der, insbesondere auf einem Ladungsträger (C) angeordneten, Last (A) aufweist, wobei das Fahrwerk (4) in vertikaler Richtung unterhalb der Lastaufnahmeplattform (5) angeordnet ist, und wobei sich die Lastaufnahmeplattform (5) über drei Verbindungsstellen am Fahrwerk (4) abstützt, wobei an den Verbindungsstellen Kraftmess-Sensoren (K1, K2) angeordnet sind, die dazu ausgebildet sind, zumindest Kräfte senkrecht zur Fahrbahnebene (FB) (in z-Richtung) zu messen, und wobei mindestens eine Krafterfassungs-Einrichtung vorgesehen ist, die dazu ausgebildet ist, Kräfte längs zur Fahrtrichtung (in x-Richtung) während einer Beschleunigung des Transportfahrzeugs (1) in Fahrtrichtung zu erfassen, **dadurch gekennzeichnet, dass** eine elektronische Datenverarbeitungseinrichtung vorgesehen ist, die dazu eingerichtet ist, aus den gemessenen und erfassten Kräften Masse und Schwerpunktlage der auf der Lastaufnahmeplattform (5) aufgenommenen Last (A) zu berechnen.

16. Transportfahrzeug (1) nach Anspruch 15, **dadurch gekennzeichnet, dass** die Krafterfassung-Einrichtung mindestens einen Beschleunigungssensor umfasst.

17. Transportfahrzeug (1) nach Anspruch 15 oder 16, **dadurch gekennzeichnet, dass** die Krafterfassung-Einrichtung mindestens einen Drehzahlsensor eines Fahrantriebs umfasst.

18. Transportfahrzeug (1) nach einem der Ansprüche 15 bis 17, **dadurch gekennzeichnet, dass** die Krafterfassung-Einrichtung Kraftmess-Sensoren (K1, K2) an mindestens zwei Verbindungsstellen umfasst, wobei die Kraftmess-Sensoren (K1, K2) dazu ausgebildet sind, Kräfte längs zur Fahrtrichtung (in x-Richtung) zu messen.

19. Transportfahrzeug (1) nach einem der Ansprüche 15 bis 18, **dadurch gekennzeichnet, dass** an mindestens zwei Verbindungsstellen Kraftmess-Sensoren (K1, K2) vorgesehen sind, die dazu ausgebildet sind, Kräfte quer zur Fahrtrichtung (in y-Richtung) zu messen.

20. Transportfahrzeug (1) nach einem der Ansprüche 15 bis 19, **dadurch gekennzeichnet, dass** die Verbindungsstellen als Gelenkverbindungen ausgebildet sind.

21. Transportfahrzeug (1) nach Anspruch 20, **dadurch gekennzeichnet, dass** die Gelenkverbindungen als Bolzenverbindungen und die Kraftmess-Sensoren (K1, K2) als Kraftmess-Bolzen (28, 53) ausgebildet sind, die für die Bolzenverbindungen vorgesehen sind.

22. Transportfahrzeug (1) nach Anspruch 21, **dadurch gekennzeichnet, dass** die Lastaufnahmeplattform (5) an einem Tragrahmen (3) angeordnet ist und das Fahrwerk (4) eine Mittelachse (10) mit zwei nicht gelenkten Rädern (10a, 10b), eine Vorderachse (11) mit mindestens einer gelenkten Radeinheit (11a) und eine Hinterachse (12) mit mindestens einer gelenkten Radeinheit (12a) aufweist, und die Mittelachse (10) und die Vorderachse (11) des Fahrwerks (4) an einem ersten Ausleger (15) angeordnet sind, der mit dem Tragrahmen (3) mittels einer ersten Gelenkachse (G1), die eine in Fahrzeugquerrichtung (Q) verlaufende horizontale Schwenkachse (S1) aufweist, gelenkig verbunden ist, wobei die erste Gelenkachse (G1) zwei Gelenkverbindungen (G1a, G1b) umfasst, die in Fahrzeugquerrichtung (Q) voneinander beabstandet angeordnet und jeweils als Bolzenverbindung ausgebildet sind, für die mindestens ein Kraftmess-Bolzen (28) vorgesehen ist, der dazu ausgebildet ist, Kräfte in x-Richtung und in z-Richtung zu messen, und die Hinterachse (12) des Fahrwerks (4) an einem zweiten Ausleger (16) angeordnet ist, der mit der Mittelachse (10) oder dem ersten Ausleger (15) mittels einer zweiten Gelenkachse (G2), die eine in Fahrzeugquerrichtung (Q) verlaufende horizontale Schwenkachse (S2) aufweist, gelenkig verbunden ist, wobei der zweite Ausleger (16) mittels eines Koppelelements (20) mit dem Tragrahmen (3) verbunden ist, das mit dem zweiten Ausleger (16) und mit dem Tragrahmen (3) gelenkig verbunden ist, wobei das Koppelelement (20) mindestens einen Zug-Druckstab (50) aufweist, der mit dem zweiten Ausleger (16) mittels einer dritten Gelenkachse (G3), die eine in Fahrzeugquerrichtung (Q) verlaufende horizontale Schwenkachse (S3) aufweist, und der mit dem Tragrahmen (3) mittels einer vierten Gelenkachse (G4), die eine in Fahrzeugquerrichtung (Q) verlaufende horizontale Schwenkachse (S4) aufweist, gelenkig verbunden ist, wobei die dritte Gelenkachse (G3) und die vierte Gelenkachse (G4) jeweils als Gelenkverbindung ausgebildet ist, die als Bolzenverbindung ausgebildet ist, für die mindestens ein Kraftmess-Bolzen (53) vorgesehen ist, der dazu ausgebildet ist, Kräfte in z-Richtung zu messen.

## Claims

1. Method for load measurement in an, in particular driverless, transport vehicle (1), which is configured as a flat platform truck, for horizontal transport of a load (A), wherein the transport vehicle (1) has a chassis (4) for driving on a carriageway plane (FB) and a load-receiving platform (5) for receiving the load (A), which is arranged on a load carrier (C) in particular, wherein the chassis (4) is arranged below the load-receiving platform (5) in the vertical direction, and wherein the load-receiving platform (5) is supported on the chassis (4) via three connecting points, wherein force measurements are carried out at the connecting points by means of sensors (K1, K2), wherein at least the forces perpendicular to the carriageway plane (FB) (in the z-direction) are measured at all three connecting points and the forces along the direction of travel (in the x-direction) are ascertained during an acceleration of the transport vehicle (1) in the direction of travel, **characterized in that** the mass and centre of gravity position of the load (A) received on the load-receiving platform (5) are calculated therefrom in an electronic data-processing device.

2. Method according to Claim 1, **characterized in that** the forces along the direction of travel (in the x-direction) are measured by means of at least one acceleration sensor.

3. Method according to Claim 1 or 2, **characterized in that** the forces along the direction of travel (in the x-direction) are calculated by means of calculating the acceleration from rotation speeds of a traction drive.

4. Method according to one of Claims 1 to 3, **characterized in that** the forces along the direction of travel (in the x-direction) are measured at at least two connecting points.

5. Method according to one of Claims 1 to 4, **characterized in that** the forces transverse to the direction of travel (in the y-direction) are measured at at least two connecting points.

6. Method according to one of Claims 1 to 5, **characterized in that** initially the forces are measured when the transport vehicle (1) with the received load (A) is at a standstill and thus the mass of the load (A) is ascertained and also the x- and y-coordinates of the centre of gravity of the load are determined, then the transport vehicle (1) with the load is accelerated in the x-direction and the response forces in the x-direction to this acceleration are ascertained and at the same time the forces in the z-direction are measured at the three connecting points.

7. Method according to one of Claims 1 to 6, **characterized in that** a plausibility check on the force measurements is carried out in the data-processing device, wherein the force measurements are classified as being plausible when the changes in the force measurement values in the z-direction add up to zero for each measurement.

8. Method according to one of Claims 1 to 7, **characterized in that** the centre of gravity position of the load (A) is ascertained by calculation from the measurement values given a known geometric arrangement of the connecting points.

9. Method according to one of Claims 1 to 8, **characterized in that** the calculated mass and centre of gravity position of the load (A) are compared with predefined load specifications of the transport vehicle in the electronic data-processing device and if a deviation that is greater than a predefined limit value is established, the transport process is interrupted.

10. Method according to one of Claims 1 to 9, **characterized in that** the calculated centre of gravity position of the load (A) is compared with a predefined optimum centre of gravity position in the electronic data-processing device and if a deviation that is greater than a predefined limit value is established, a driving manoeuvre is initiated in order to optimize the centre of gravity position by a changed position for passing beneath the load.

11. Method according to one of Claims 1 to 10, **characterized in that** driving profile parameters of the transport vehicle (1) are adjusted to the calculated mass and centre of gravity position of the load (A) in the electronic data-processing device.

12. Method according to one of Claims 1 to 11, **characterized in that** the calculated mass and centre of gravity position of the load (A) are stored in the electronic data-processing device and/or a central computer unit for statistical purposes.

13. Method according to one of Claims 1 to 12, **characterized in that** the mass and centre of gravity position of the load (A) are continuously or periodically ascertained during driving and if slipping of the load (A) due to changes in the ascertained values is identified by the electronic data-processing device, a safety response, which in particular comprises emergency stopping or a reduction in the driving speed and/or indication by warning signals and/or a warning message to a superordinate traffic control system, is initiated.

14. Method according to one of Claims 1 to 13, **characterized in that** the mass and centre of gravity position of the load (A) are continuously ascertained during driving and the profile and state of the carriageway plane (FB) are detected therefrom in the electronic data-processing device.

15. Transport vehicle (1), in particular driverless, transport vehicle (1), which is configured as a flat platform truck, for horizontal transport of a load (A) on a carriageway plane (FB) for carrying out the method according to one of Claims 1 to 14, wherein the transport vehicle (1) has a chassis (4) and a load-receiving platform (5) for receiving the load (A), which is arranged on a load carrier (C) in particular, wherein the chassis (4) is arranged below the load-receiving platform (5) in the vertical direction, and wherein the load-receiving platform (5) is supported on the chassis (4) via three connecting points, wherein force measurement sensors (K1, K2) are arranged at the connecting points, the force measurement sensors being configured to measure at least forces perpendicular to the carriageway plane (FB) (in the z-direction), and wherein at least one force detection device is provided, which is configured to detect forces along the direction of travel (in the x-direction) during an acceleration of the transport vehicle (1) in the direction of travel, **characterized in that** an electronic data-processing device is provided, which is configured to calculate the mass and centre of gravity position of the load (A) received on the load-receiving platform (5) from the measured and detected forces.

16. Transport vehicle (1) according to Claim 15, **characterized in that** the force detection device comprises at least one acceleration sensor.

17. Transport vehicle (1) according to Claim 15 or 16, **characterized in that** the force detection device comprises at least one rotation speed sensor of a traction drive.

18. Transport vehicle (1) according to one of Claims 15 to 17, **characterized in that** the force detection device comprises force measurement sensors (K1, K2) at at least two connecting points, wherein the force measurement sensors (K1, K2) are configured to measure forces along the direction of travel (in the x-direction).

19. Transport vehicle (1) according to one of Claims 15 to 18, **characterized in that** force measurement sensors (K1, K2), which are configured to measure forces transverse to the direction of travel (in the y-direction), are provided at at least two connecting points.

20. Transport vehicle (1) according to one of Claims 15 to 19, **characterized in that** the connecting points are configured as articulated joints.

21. Transport vehicle (1) according to Claim 20, **characterized in that** the articulated joints are configured as pin connections and the force measurement sensors (K1, K2) are configured as force measurement pins (28, 53) which are provided for the pin connections.

22. Transport vehicle (1) according to Claim 21, **characterized in that** the load-receiving platform (5) is arranged on a supporting frame (3) and the chassis (4) has a middle axle (10) with two non-steered wheels (10a, 10b), a front axle (11) with at least one steered wheel unit (11a) and one rear axle (12) with at least one steered wheel unit (12a), and the middle axle (10) and the front axle (11) of the chassis (4) are arranged on a first boom (15), which is connected in an articulated manner to the supporting frame (3) by means of a first joint axis (G1), which has a horizontal pivot axis (S1) which runs in the transverse direction (Q) of the vehicle, wherein the first joint axis (G1) comprises two articulated joints (G1a, G1b) which are arranged at a distance from each other in the transverse direction (Q) of the vehicle and are each configured as a pin connection for which at least one force measurement pin (28) is provided, which is configured to measure forces in the x-direction and in the z-direction, and the rear axle (12) of the chassis (4) is arranged on a second boom (16), which is connected in an articulated manner to the middle axle (10) or to the first boom (15) by means of a second joint axis (G2), which has a horizontal pivot axis (S2) which runs in the transverse direction (Q) of the vehicle, wherein the second boom (16) is connected to the supporting frame (3) by means of a coupling element (20) and the supporting frame is connected in an articulated manner to the second boom (16) and to the supporting frame (3), wherein the coupling element (20) has at least one tension/pressure rod (50) which is connected in an articulated manner to the second boom (16) by means of a third joint axis (G3), which has a horizontal pivot axis (S3) which runs in the transverse direction (Q) of the vehicle, and which is connected in an articulated manner to the supporting frame (3) by means of a fourth joint axis (G4), which has a horizontal pivot axis (S4) which runs in the transverse direction (Q) of the vehicle, wherein the third joint axis (G3) and the fourth joint axis (G4) are each configured as an articulated joint which is configured as pin connection for which at least one force measurement pin (53) is provided, which is configured to measure forces in the z-direction.

## Revendications

1. Procédé de mesure de charge pour un véhicule de transport (1), en particulier sans conducteur, réalisé en tant que chariot à plateforme plat, pour le transport horizontal d'une charge (A), dans lequel le véhicule de transport (1) présente un mécanisme de roulement (4) pour rouler sur un plan de voie de roulement (FB) et une plateforme de réception de charge (5) pour recevoir la charge (A), en particulier disposée sur un support de charge (C), dans lequel le mécanisme de roulement (4) est disposé dans la direction verticale au-dessous de la plateforme de réception de charge (5), et dans lequel la plateforme de réception de charge (5) prend appui sur le mécanisme de roulement (4) par l'intermédiaire de trois points de jonction, dans lequel des mesures de force sont effectuées aux points de jonction au moyen de capteurs (K1, K2), dans lequel au moins les forces perpendiculaires au plan de voie de roulement (FB) (dans la direction z) sont mesurées au niveau de l'ensemble des trois points de jonction, et les forces longitudinales par rapport au sens de la marche (dans la direction x) sont établies pendant une accélération du véhicule de transport (1) dans le sens de la marche,
**caractérisé en ce que** la masse et la position de centre de gravité de la charge (A) reçue sur la plateforme de réception de charge (5) sont calculées sur cette base dans un dispositif de traitement de données électronique.

2. Procédé selon la revendication 1, **caractérisé en ce que** les forces longitudinales par rapport au sens de la marche (dans la direction x) sont mesurées au moyen d'au moins un capteur d'accélération.

3. Procédé selon la revendication 1 ou 2, **caractérisé en ce que** les forces longitudinales par rapport au sens de la marche (dans la direction x) sont calculées au moyen d'un calcul de l'accélération à partir des vitesses de rotation d'un système d'entraînement.

4. Procédé selon l'une quelconque des revendications 1 à 3, **caractérisé en ce que** les forces longitudinales par rapport au sens de la marche (dans la direction x) sont mesurées à au moins deux points de jonction.

5. Procédé selon l'une quelconque des revendications 1 à 4, **caractérisé en ce que** les forces transversales par rapport au sens de la marche (dans la direction y) sont mesurées à au moins deux points de jonction.

6. Procédé selon l'une quelconque des revendications 1 à 5, **caractérisé en ce que** les forces sont d'abord mesurées à l'arrêt du véhicule de transport (1) avec la charge (A) reçue, et ainsi la masse de la charge (A) est établie, et les coordonnées x et y du centre de gravité de la charge sont déterminées, ensuite le véhicule de transport (1) avec la charge est accéléré dans la direction x, et les forces de réaction dans la direction x suite à cette accélération sont établies, et en même temps les forces dans la direction z sont mesurées aux trois points de jonction.

7. Procédé selon l'une quelconque des revendications 1 à 6, **caractérisé en ce qu'**un contrôle de vraisemblance des mesures de force est effectué dans le dispositif de traitement de données, dans lequel les mesures de force sont classifiées comme vraisemblables si les variations des valeurs de mesure de force dans la direction z ont aboutissent à un total de zéro à chaque mesure.

8. Procédé selon l'une quelconque des revendications 1 à 7, **caractérisé en ce que** la position de centre de gravité de la charge (A) est établie par calcul à partir des valeurs de mesure pour une disposition géométrique connue des points de jonction.

9. Procédé selon l'une quelconque des revendications 1 à 8, **caractérisé en ce que** la masse et la position de centre de gravité calculées de la charge (A) sont comparées dans le dispositif de traitement de données électronique avec des spécifications de charge prédéfinies du véhicule de transport, et si un écart qui est supérieur à une valeur limite prédéfinie est constaté, l'opération de transport est abandonnée.

10. Procédé selon l'une quelconque des revendications 1 à 9, **caractérisé en ce que** la position de centre de gravité calculée de la charge (A) est comparée dans le dispositif de traitement de données électronique avec une position de centre de gravité optimale prédéfinie, et si un écart qui est supérieur à une valeur limite prédéfinie est constaté, une manœuvre de roulement est lancée pour optimiser la position de centre de gravité par une position modifiée de passage sous la charge.

11. Procédé selon l'une quelconque des revendications 1 à 10, **caractérisé en ce que** des paramètres de profil de roulement du véhicule de transport (1) sont adaptés à la masse et à la position de centre de gravité calculées de la charge (A) dans le dispositif de traitement de données électronique.

12. Procédé selon l'une quelconque des revendications 1 à 11, **caractérisé en ce que** la masse et la position de centre de gravité calculées de la charge (A) sont stockées dans le dispositif de traitement de données électroniques et/ou une unité de calcul centrale à des fins statistiques.

13. Procédé selon l'une quelconque des revendications 1 à 12, **caractérisé en ce que** la masse et la position de centre de gravité de la charge (A) sont établies en continu ou périodiquement pendant le trajet, et si un glissement de la charge (A) est identifié par des variations des valeurs établies par le dispositif de traitement de données électronique, une réaction de sécurité est lancée qui comprend en particulier un arrêt d'urgence ou une diminution de la vitesse de roulement et/ou une signalisation par des signaux d'alarme et/ou un avertissement adressé à un système de commande de trafic de niveau supérieur.

14. Procédé selon l'une quelconque des revendications 1 à 13, **caractérisé en ce que** la masse et la position de centre de gravité de la charge (A) sont établies en continu pendant le trajet, et le profil et l'état du plan de voie de roulement (FB) sont détectés sur cette base dans le dispositif de traitement de données électroniques.

15. Véhicule de transport (1), en particulier véhicule de transport (1) sans conducteur, réalisé en tant de chariot à plateforme plat, pour le transport horizontal d'une charge (A) sur un plan de voie de roulement (FB) pour exécuter le procédé selon l'une quelconque des revendications 1 à 14, dans lequel le véhicule de transport (1) présente un mécanisme de roulement (4) et une plateforme de réception de charge (5) pour recevoir la charge (A) en particulier disposée sur un support de charge (C), dans lequel le mécanisme de roulement (4) est disposé dans la direction verticale au-dessous de la plateforme de réception de charge (5), et dans lequel la plateforme de réception de charge (5) prend appui sur le mécanisme de roulement (4) par l'intermédiaire de trois points de jonction, dans lequel des capteurs de mesure de force (K1, K2) qui sont réalisés pour mesurer au moins des forces perpendiculaires au plan de voie de roulement (FB) (dans la direction z) sont disposés aux points de jonction, et dans lequel au moins un dispositif de détection de force est prévu qui est réalisé pour détecter des forces longitudinales par rapport au sens de la marche (dans la direction x) pendant une accélération du véhicule de transport (1) dans le sens de la marche,
**caractérisé en ce qu'**un dispositif de traitement de données électronique est prévu qui est aménagé pour calculer à partir des forces mesurées et détectées la masse et la position de centre de gravité de la charge (A) reçue sur la plateforme de réception de charge (5).

16. Véhicule de transport (1) selon la revendication 15, **caractérisé en ce que** le dispositif de détection de force comprend au moins un capteur d'accélération.

17. Véhicule de transport (1) selon la revendication 15 ou 16, **caractérisé en ce que** le dispositif de détection de force comprend au moins un capteur de vitesse de rotation d'un système d'entraînement.

18. Véhicule de transport (1) selon l'une quelconque des revendications 15 à 17, **caractérisé en ce que** le dispositif de détection de force comprend des capteurs de mesure de force (K1, K2) à au moins deux points de jonction, dans lequel les capteurs de mesure de force (K1, K2) sont réalisés pour mesurer des forces longitudinales par rapport au sens de la marche (dans la direction x).

19. Véhicule de transport (1) selon l'une quelconque des revendications 15 à 18, **caractérisé en ce que** des capteurs de mesure de force (K1, K2) sont prévus à au moins deux points de jonction, qui sont réalisés pour mesurer des forces transversales par rapport au sens de la marche (dans la direction y).

20. Véhicule de transport (1) selon l'une quelconque des revendications 15 à 19, **caractérisé en ce que** les points de jonction sont réalisés sous forme d'assemblages articulés.

21. Véhicule de transport (1) selon la revendication 20, **caractérisé en ce que** les assemblages articulés sont réalisés sous forme d'assemblages boulonnés, et les capteurs de mesure de force (K1, K2) sont réalisés sous forme d'axes dynamométriques (28, 53) qui sont prévus pour les assemblages boulonnés.

22. Véhicule de transport (1) selon la revendication 21, **caractérisé en ce que** la plateforme de réception de charge (5) est disposée sur un cadre porteur (3), et le mécanisme de roulement (4) présente un essieu central (10) pourvu de deux roues non directrices (10a, 10b), un essieu avant (11) pourvu d'au moins un ensemble de roue directrice (11a) et un essieu arrière (12) pourvu d'au moins un ensemble de roue directrice (12a), et l'essieu central (10) et l'essieu avant (11) du mécanisme de roulement (4) sont disposés sur une première flèche (15) qui est reliée de manière articulée au cadre porteur (3) au moyen d'un premier essieu articulé (G1) qui présente un axe de pivotement horizontal (S1) s'étendant dans la direction transversale du véhicule (Q), dans lequel le premier essieu articulé (G1) comprend deux assemblages articulés (G1a, G1b) qui sont disposés de manière espacée l'un de l'autre dans la direction transversale du véhicule (Q) et sont respectivement réalisés sous forme d'assemblage boulonné, pour lesquels au moins un axe dynamométrique (28) est prévu qui est réalisé pour mesurer des forces dans la direction x et dans la direction z, et l'essieu arrière (12) du mécanisme de roulement (4) est disposé sur une deuxième flèche (16) qui est reliée de manière articulée à l'essieu central (10) ou à la première flèche (15) au moyen d'un deuxième essieu articulé (G2) qui présente un axe de pivotement horizontal (S2) s'étendant dans la direction transversale du véhicule (Q), dans lequel la deuxième flèche (16) est reliée au cadre porteur (3) au moyen d'un élément de d'accouplement (20) qui est relié de manière articulée à la deuxième flèche (16) et au cadre porteur (3), dans lequel l'élément d'accouplement (20) présente au moins une barre de traction/compression (50) qui est reliée de manière articulée à la deuxième flèche (16) au moyen d'un troisième essieu articulé (G3) qui présente un axe de pivotement horizontal (S3) s'étendant dans la direction transversale du véhicule (Q), et qui est reliée au cadre porteur (3) au moyen d'un quatrième essieu articulé (G4) qui présente un axe de pivotement horizontal (S4) s'étendant dans la direction transversale du véhicule (Q), dans lequel le troisième essieu articulé (G3) et le quatrième essieu articulé (G4) sont respectivement réalisés sous forme d'assemblages articulés qui sont réalisés sous forme d'assemblages boulonnés pour lesquels au moins un boulon dynamométrique (53) est prévu qui est réalisé pour mesurer des forces dans la direction z.
